(19) Europäisches Patentamt
European Patent Office
Office européen des brevets

(11) Veröffentlichungsnummer: **0 232 519**
**B1**

(12) **EUROPÄISCHE PATENTSCHRIFT**

(45) Veröffentlichungstag der Patentschrift: **29.08.90**

(21) Anmeldenummer: **86117379.7**

(22) Anmeldetag: **13.12.86**

(51) Int. Cl.[5]: **C 08 F 226/04,** D 06 P 5/08, C 08 F 8/32, C 08 F 220/54, C 08 F 226/02, C 08 F 220/34

# (54) Copolymerisat, Verfahren zu seiner Herstellung und Verwendung.

(30) Priorität: **10.01.86 DE 3600514**

(43) Veröffentlichungstag der Anmeldung: **19.08.87 Patentblatt 87/34**

(45) Bekanntmachung des Hinweises auf die Patenterteilung: **29.08.90 Patentblatt 90/35**

(84) Benannte Vertragsstaaten: **AT BE CH DE ES FR GB IT LI NL**

(56) Entgegenhaltungen:
**GB-A-1 216 399**
**GB-A-2 923 701**

(73) Patentinhaber: **CASSELLA Aktiengesellschaft**
**Hanauer Landstrasse 526**
**D-6000 Frankfurt am Main 61 (DE)**

(72) Erfinder: **Keil, Karl-Heinz, Dr.**
**Lübecker Weg 3**
**D-6450 Hanau-Mittelbuchen (DE)**
Erfinder: **Engelhardt, Fritz, Dr.**
**Hünfelder Strasse 20**
**D-6000 Frankfurt am Main 61 (DE)**
Erfinder: **Sternberger, Klaus**
**Georg-Opper-Strasse 12**
**D-6388 Bad Vilbel 4 (DE)**
Erfinder: **Rösch, Günter**
**Hohlweg 12**
**D-6232 Bad Soden/Ts. (DE)**

(74) Vertreter: **Urbach, Hans-Georg, Dr. et al**
**Hanauer Landstrasse 526**
**D-6000 Frankfurt am Main 61 (DE)**

**EP 0 232 519 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein wasserlösliches vernetztes Copolymerisat, ein Verfahren zu seiner Herstellung und seine Verwendung als Textilhilfsmittel. Das Textilhilfsmittel dient insbesondere zur Verbesserung der Echtheitseigenschaften von Färbungen und Drucken mit Reaktivfarbstoffen auf Zellulosematerial.

Das mit Reaktivfarbstoffen zu färbende oder zu bedruckende Textilmaterial kann als z.B. Gewebe, Gewirk oder auch als Garn oder Faden vorliegen und aus Zellulose bestehen oder Zellulose neben Synthesefasern enthalten. Das Färben dieser Materialien kann nach bekannten Verfahren dadurch erfolgen, daß das Textilmaterial nach Art eines Ausziehverfahrens mit einer Reaktivfarbstoff enthaltenden Färbeflotte, meist bei erhöhter Temperatur und bei den meisten handelsüblichen Reaktivfarbstofftypen in Gegenwart von Alkali, behandelt wird, oder es können zweistufige Verfahren, wie z.B. das sogenannte Pad-Steam-Verfahren oder das Kaltverweilverfahren, eingesetzt werden. Beim Pad-Steam-Verfahren wie auch beim Kaltverweilverfahren wird das Textilmaterial zunächst mit einer Reaktivfarbstoffflotte geklotzt, wobei Alkali schon zugegen sein kann oder auch in einem getrennten Imprägnierschritt applizieft werden kann. Beim Pad-Steam-Verfahren wird die Farbstofffixierung dann durch einen Dämpfprozess, beim Kaltverweilverfahren durch Aufdocken der imprägnierten Ware und mehrstündiges Aufbewahren bei Normaltemperature vollzogen. Auch andere Fixierschritte, wie z.B. das Behandeln der mit einer alkalifreien Reaktivfarbstoffflotte geklotzten Ware mit heißer Wasserglaslösung, sind bekannt geworden und werden technisch ausgeübt.

Bei allen Reaktivfärbe- und -druckverfahren wird im Verlkauf des Färbe- und Druckvorgangs eine kovalente chemische Bindung zwischen Farbstoffmolekül und Zellulosemolekül hergestellt. Dieser Farbstofftyp wird somit chemisch auf der Zellulosefaser verankert.

Theoretisch sollten somit Färbungen und Drucke von Reaktivfarbstoffen auf Zellulose ohne weiteres sehr hohe Naßechtheiten aufweisen. In der Praxis zeigt es sich jedoch, daß dies nicht der Fall ist. Die Gründe hierfür sind unterschiedlicher Art und möglicherweise noch nicht in ihrer Gesamtheit bekannt. Es kann jedoch gesagt werden, daß ein mehr oder weniger großer Anteil des zum Färben eingesetzten Reaktivfarbstoffs nicht mit der Zellulosefaser, sondern mit Wassermolekülen reagiert. Bei der Reaktion mit Wasser verliert der Reaktivfarbstoff seine chemische Bindungsfähigkeit an die Zellulose und wird nur noch durch Nebenvalenzkräfte an das Zellulosefasermolekül gebunden.

Diese Erscheinung bei der praktischen Ausführung der Färbungen führt im Endeffekt dazu, daß Färbungen und Drucke von Reaktivefarbstoffen auf Zellulosefasern nur dann hohe Naßechtheiten aufweisen, wenn sie nach der Färbeoperation einer gründlichen Nachwäsche unterworfen werden. Diese erforderliche Nachbehandlung kann einen technischen Aufwand erfordern, der an den eigentlichen Färbeprozeß heranreicht. Insbesondere werden für die Nachwäsche größe Wassermengen benötigt, und es ist häufig erforderlich, nicht nur einen einzeigen, sondern mehere Waschvorgänge hintereinander zu schalten, um die gewünschte hohe Naßechtheit der Färbungen zu erzielen.

Es hat auch nicht an Versuchen und Verschlägen gefehlt, das Auswaschen der Farbstoffreste zu erleichtern bzw. die Naßechtheit von Färbungen und Drucken zu steigern, ohne den Auswaschaufwand erhöhen zu müssen.

Aus der DOS 29 10 583 ist ein Seifhilfsmittel für Färbungen und Drucke auf Textilmaterialien bekannt, das auf der Verwendung eines Alkalialuminiumsilikats, gegebenenfalls in Kombination mit Polyvinylpyrrolidon, basiert.

Das Problem, die an sich wasserlöslichen, aufgrund ihrer Substantivität an die Zellulosefaser durch Nebenvalenzkräfte gebundenen Anteile des hydrolysierten Reaktivfarbstoffs von der Faser zu entfernen und damit die Naßechtheiten der Ware zu verbessern, ist auch bereits in den DOS 27 47 358 und DOS 28 43 645 aufgegriffen worden. Nach der Empfehlung der DOS 27 47 358 sollen für diesen Zweck Polyamine, Polyamide oder Polyurethane sowie Polyharnstoffe eingesetzt werden. Nach den Angaben der DOS 28 43 645 können für denselben Zweck alkoxylierte Polyamine, wie z.B. alkoxyliertes Polyethylenimin, eingesetzt werden.

Zur Lösung eines anderen Problems, nämlich der Naßechtheitsverbesserung von Substantivfärbungen, ist aus den DAS 1 111 144 und 1 131 649, der belgischen Patentschrift 625 711 und der US-Patentschrift 3 334 138 die Nachbehandlung der Färbungen mit basischen Polyguanidinverbindungen und von polymeren quaternierten, stickstoffhaltigen Verbindungen bekannt.

Es ist auch bekannt zur Naßechheitsverbesserung von Substantivfärbungen eine Nachbehandlung mit Kondensationsprodukten aus Cyanamid, Formaldehyd und Salzen organischer Amine oder Ammoniumsalzen durchzuführen.

Die japanische Patentschrift 60.021987 beschreibt für die Verbesserung der Naßechtheiten reaktiv gefärbter oder bedruckter Textilien Umsetzungsprodukte von tertiären Polyaminen mit mehrbasischen Carbonsäuren, wie z.B. Phenolsulfonsäuren, Phenolcarbonsäuren, Polycarbonsäuren sowie deren Anhydriden. Solche Produkte haben durch ihren Salz charakter den Nachteil, daß bei hoher Elektrolytkonzentration ihre Wirkung schwächer wird. In der EP 100 300 wird die Nachbehandlung mit Reaktivfarbstoffen gefärbter Textilien durch Kondensationsprodukte aus Aminoalkanphosphonsäuren mit Epichlorhydrin in Anwesenheit von Stabilisatoren beschrieben.

Auch Polymerisate aud Polyalkylenpolyamin mit Epichlorhydrin werden in der DE—OS 3 216 745 zur Echtheitsverbesserung von Färbungen beschrieben.

Alle bisher für die Nachbehandlung von Reaktiv- oder Substantivfärbungen bekannt gewordenen polymeren Produkte auf der Basis von peralkylierten Polyaminen haben jedoch den entscheidenden Nachteil, daß beim Färben mit Metallkomplexreaktivfarbstoffen unvorhergesehene Nuancenverschiebungen auftreten können. Außerdem ist ihre Wirksamkeit z.T. relativ gering, so daß hohe Einsatzmengen verwendet werden müssen, um signifikante Effekte zu erzeilen. Die erzielten Effekte sind insbesondere in Bezug auf Waschechtheit sowie auch in den Naßreibechtheiten nicht ausreichend. Bei der Nachbehandlung von Reaktivfärbungen mit den bekannten Kondensationsprodukten aus Cyanamid, Formaldehyd und Aminen läßt die erreichbare Schweißechtheit noch erheblich zu wünschen übrig. Außerdem finden sich auf der behandelten Ware oft Spuren von Formaldehyd. Die Nachbehandlung mit den nach dem Stand der Technik bekannten basischen Verbindungen ist auch verfahrensmäßig diffizil. Sie muß nämlich sehr sorgfältig durchgeführt werden, damit die Wiederausfällung abgelösten Farbstoffs sowie das Verkleben adsorbierter Farbstoffanteile auf der Faseroberfläche vermieden wird. Bei unvorsichtigem Umgang mit den bekannten Nachbehandlungsmitteln kann somit leicht das Gegenteil von dem gewünschten Effekt eintreten.

Ein weiterer Mangel bisher bekannter Nachbehandlungsmittel auf der Basis peralkylierter Polyamine besteht darin, daß sie in einem pH-Bereich über 9 Amine, wie Methylamin oder Dimethylamin, abspalten. Dies führt bei der Anwendung schon im Spurenbereich zu erheblichen Geruchsbelästigungen. Ähnlich verhält sich auch Polyethylenimin.

Im Prinzip ist es selbstverständlich möglich, Reaktivfärbungen mit hohen Naßechtheiten einfach dadurch zu erzeugen, daß man das gefärbte Material in einer ausreichenden Anzahl, z.B. 6 bis 8 hintereinander geschalteter Waschvorgänge unter kräftiger mechanischer Bewegung bei hoher Temperatur und unter Einsatz wirksamer Detergentien mehrfach wäscht. Dieses Verfahren ist jedoch nicht nur sehr zeitraubend und setzt einen hohen apparativen Aufwand voraus, sondern es wird dabei auch eine große Menge Wasser verbraucht, was im Sinne einer sinnvollen Nutzung des Wassers, inbesondere der Trinkwasservorräte nicht mehr tragbar ist. Außerdem fallen sehr hohe Mengen von gebrauchten Waschflotten an, die vor ihrer Einleitung in die Kanalisation oder Flüsse aufgearbeitet werden müssen.

Überraschend wurde nun gefunden, daß man bei der Herstellung von Reaktivfärbungen einen größen Teil der sonst erforderlichen Waschstufen einsparen kann und dennoch zu Färbungen von hervorrangender Echtheit gelangt, wenn man die Färbungen einer Nachbehandlung mit einem erfindungsgemäßen Copolymerisat unterwirft.

Das erfindungsgemäße wasserlösliche Copolymerisat ist herstellbar durch Copolymerisation

a) eine Diallylammonium-Komponente A der Formel I

$$\left[ CH_2 = \overset{\overset{R^3}{|}}{C} - CH_2 - \underset{\underset{R^2}{|}}{\overset{\overset{R^1}{|}}{N}} - CH_2 - \overset{\overset{R^4}{|}}{C} = CH_2 \right]^{\oplus} Y^{\ominus} \qquad (I)$$

und

b) einer Amid-Komponente B, die aus einer basischen Komponente $B^1$ der Formel II

$$R^5-\overset{\overset{R^6}{|}}{N}-(CH_2)_m-X-CO-(CH_2)_n-\overset{\overset{R^7}{|}}{C}=CHR^8 \qquad (II)$$

und/gegebenenfalls einer Amid-Komponente $B^2$ der formel III

$$R^9-\overset{\overset{R^{10}}{|}}{N}-CO-(CH_2)_p-\overset{\overset{R^{11}}{|}}{C}=CHR^{12} \qquad (III)$$

und/oder einer N-Vinylacylamid-Komponente $B^3$ der Formel IV

$$CH_2=CH-\overset{\overset{R^{13}}{|}}{N}-CO-R^{14} \qquad (IV)$$

und/oder einer Ammonium-Komponente $B^4$ der Formel V

$$\left[R^{16}-\underset{R^{17}}{\overset{R^{15}}{\underset{|}{\overset{|}{N}}}}-(CH_2)_q-X-CO-(CH_2)_r-\overset{R^{18}}{\overset{|}{C}}=CHR^{19}\right]^{\oplus} Z^{\ominus} \qquad (V)$$

besteht und

c) einer (Meth)Acrylester-Komponente C der Formel VI

$$CH_2=\overset{R^{20}}{\overset{|}{C}}-COOR^{21} \qquad (VI)$$

im Molverhältnis A:B:C = 1:(0,002 bis 4,5):(0 bis 0,5) und anschließender Vernetzung mit

d) einer polyfunktionellen Alkylierungskomponente D und

e) einer Polyamin-Komponente E, die aus einer Polyamin-Komponente $E^1$ der Formel VII

$$H_2N-(CH_2)_s\left[NH-(CH_2)_s-\underset{T}{\underset{|}{N}}-(CH_2)_s\right]_t NH_2 \qquad (VII)$$

und/oder einer Polyamin-Komponente $E^2$ der Formel VIII

$$HOOC-R^{22}CO-NH-(CH_2)_u-NH\left[(CH_2)_u-NH\right]_w R^{23} \qquad (VIII)$$

besteht,

im Molverhältnis $B^1$:D:E = 1:(0,002 bis 2):(0 bis 5), wobei bedeuten:

$R^1$, $R^2$, $R^5$, $R^6$, $R^{21}$ = $(C_1-C_{10})$Alkyl,

$R^3$, $R^4$, $R^7$, $R^8$, $R^{11}$, $R^{12}$, $R^{18}$, $R^{19}$, $R^{20}$ = Wasserstoff oder Methyl,

$R^9$, $R^{10}$, $R^{13}$ = Wasserstoff oder $(C_1-C_8)$Alkyl,

$R^{14}$, $R^{15}$, $R^{16}$, $R^{17}$ = $(C_1-C_8)$Alkyl oder

$R^{13}$ und $R^{14}$ zusammen = $-(CH_2)_3-$, $-(CH_2)_4-$ oder $-(CH_2)_5-$,

$R^{22}$ = ein Alkylenrest mit 1 bis 8 C-Atomen oder Phenylen,

$R^{23}$ Wasserstoff oder den Rest $-CO-R^{22}-COOH$,

X = —NH— oder —O—,

$Y^{\ominus}$, $Z^{\ominus}$ = ein einwertiges Anion oder ein einem einwertigen Anion äquivalenter Teil eines mehrwertigen Anions,

T = $-[(CH_2)_s-NH]_v-H$

m, q = eine der Zahlen 2, 3, 4, 5, 6, 7, 8, 9 10,

n, p, r, w = eine der Zahlen 0, 1, 2 oder 3,

s, u = eine der Zahlen 2, 3, 4 oder 5,

v = die Zahl 0 oder eine so große Zahl, daß die Polyamin-Komponente $E^1$ unter Berücksichtigung von t ein Molgewicht von 1000 bis 30000 besitzt,

t = eine so große Zahl, daß unter Berücksichtigung von v das Molgewicht der Polyamin-Komponente $E^1$ der Formel VII zwischen 1000 und 30000 liegt.

Die Alkylreste $R^1$, $R^2$, $R^5$, $R^6$, $R^9$, $R^{10}$ und $R^{13}$ bis $R^{17}$ können geradkettige oder verzweigte Alkylreste sein.

In der Diallylammonium-Komponente A der Formel I können die Reste $R^1$ und $R^2$ gleich oder verschieden sein. $R^1$ und $R^2$ bedeuten vorzugsweise $(C_2-C_4)$Alkyl und ganz bevorzugt Methyl. Die Reste $R^3$ und $R^4$ können ebenfalls gleich oder verschieden sein. Vorzugsweise sind sie gliech, und besonders bevorzugt bedeutet $R^3$ = $R^4$ = Wasserstoff.

X steht vorzugsweise für —NH—.

Die Reste $Y^{\ominus}$ und $Z^{\ominus}$ stehen für einwertige Anionen, wie z.B. für Nitrat, Hydrogensulfat, Benzolsulfonat, Acetat, Trifluoracetat, oder für den einem einwertigen Anion äquivalenten Teil eines mehrwertigen Anions, wie z.B. ein halbes Äquivalent Sulfat, oder ein drittel Äquivalent Phosphat. Vorzugsweise stehen die Reste $Y^{\ominus}$ und $Z^{\ominus}$ jeweils für ein Halogenanion, wie Fluorid, Bromid oder Iodid, vorzugsweise für Chlorid.

Die Diallylammonium-Komonente A kann aus einer Verbindung der Formel I oder aus mehreren Verbindungen der Formel I bestehen. Auch die anderen Komponenten B, $B^1$, $B^2$, $B^3$, $B^4$, C, D, $E^1$ und $E^2$ können jeweils aus einer Verbindung oder aus mehreren Verbindungen bestehen.

Die Amid-Komponente B besteht aus einer Amid-Komponente $B^1$ und gegebenenfalls aus einer Amid-Komponente $B^2$ und/oder aus einer —N—Vinylacylamid-Komponente $B^3$ und/oder aus einer Ammonium-Komponente $B^4$. Die Amid-Komponente B kann z.B. aus zwei Enzelkomponenten (z.B. $B^1 + B^2$, $B^1 + B^3$) oder z.B. aus drei Einzelkomponenten (z.B. $B^1 + B^2 + B^3$ oder $B^1 + B^3 + B^4$) bestehen. Die Amid-Komponente B kann aber auch alle vier Einzelkomponenten ($B^1 + B^2 + B^3 + B^4$) enthalten. In allen genannten Fällen können die Einzelkomponenten $B^1$, $B^2$, $B^3$, $B^4$ ihrerseits aus einer oder mehreren Einzelverbindungen der angegebenen Formeln bestehen.

In der Formel II für die basische Komponente $B^1$ bedeuten X vorzugsweise —NH— und n vorzugsweise die Zahl O und m vorzugsweise eine der Zahlen 2, 3, oder 4. $R^5$ und $R^6$ können gleich oder verschieden sein und bedeuten vorzugsweise $(C_1—C_4)$Alkyl. $R^7$ und $R^8$ können ebenfalls gleich oder verschieden sein. Beispielsweise für bevorzugte Verbindungen der Formel II sind:

$$\begin{array}{l} \quad R^6 \\ R^5—N—(CH_2)_m—NH—CO—CH{=}CH_2 \end{array} \qquad (IIa)$$

$$\begin{array}{l} \quad R^6 \\ R^5—N—(CH_2)_m—NH—CO—CH{=}CHCH_3 \end{array} \qquad (IIb)$$

$$\begin{array}{l} \quad R^6 \qquad\qquad\qquad\qquad\quad CH_3 \\ R^5—N—(CH_2)_m—NH—CO—C{=}CH_2 \end{array} \qquad (IIc)$$

$$\begin{array}{l} \quad R^6 \qquad\qquad\qquad\qquad\quad CH_3 \\ R^5—N—(CH_2)_m—NH—CO—C{=}CHCH_3 \end{array} \qquad (IId)$$

wobei in den Formeln IIa bis IId $R^5$, $R^6$ und m insbesondere die bevorzugten Bedeutungen besitzen.

In der Formel III für die Amid-Komponente $B^2$ bedeutet p vorzugsweise die Zahl O. $R^9$ und $R^{10}$ einerseits sowie $R^{11}$ und $R^{12}$ andererseits können gleich oder verschieden sein. $R^9$ und $R^{10}$ bedeuten vorzugsweise Wasserstoff oder $(C_1—C_4)$Alkyl. Beispiele für bevorzugte Verbindungen der Formel III sind:

$$\begin{array}{l} \quad R^{10} \\ R^9—N—CO—CH{=}CH_2 \end{array} \qquad (IIIa)$$

$$\begin{array}{l} \quad R^{10} \\ R^9—N—CO—CH{=}CHCH_3 \end{array} \qquad (IIIb)$$

$$\begin{array}{l} \quad R^{10} \qquad CH_3 \\ R^9—N—CO—C{=}CH_2 \end{array} \qquad (IIIc)$$

$$\begin{array}{l} \quad R^{10} \qquad CH_3 \\ R^9—N—CO—C{=}CHCH_3 \end{array} \qquad (IIId)$$

wobei in den Formeln IIIa bis IIId $R^9$ und $R^{10}$ insbesondere die bevorzugten Bedeutungen besitzen.

In der Formel IV für die N-Vinylacylamid-Komponente $B^3$ bedeutet $R^{14}$ vorzugsweise $(C_1—C_4)$Alkyl. $R^{13}$ bedeutet vorzugsweise Wasserstoff oder $(C_1—C_4)$Alkyl. $R^{13}$ und $R^{14}$ bedeuten vorzugsweise zusammen auch $—(CH_2)_3—$, $—(CH_2)_4—$ oder $—(CH_2)_5—$. Beispiele für bevorzugte Verbindungen der Formel IV sind N-Vinyl-2-pyrrolidon, N-Vinyl-2-piperidinon, N-Vinyl-ε-caprolactam.

In der Formel V für die Ammonium-Komponente $B^4$ bedeutet X vorzugsweise —NH—. $R^{15}$, $R^{16}$ und $R^{17}$ können gleich oder verschieden sein und bedeuten vorzugsweise $(C_1—C_4)$Alkyl, ganz besonders bevorzugt Methyl, r bedeutet vorzugsweise die Zahl O und q vorzugsweise eine der Zahlen 2, 3 oder 4.

In der Formel VI für die (Meth)Acrylester-Komponente C bedeutet $R^{21}$ in der Regel $(C_1—C_8)$Alkyl, vorzugsweise $(C_1—C_4)$Alkyl. Bei $R^{20}$ = Wasserstoff handelt es sich bei den Verbindungen der Formeln VI um Acrylester, bei $R^{20}$ = Methyl um Methacrylester.

Die polyfunktionelle Alkylierungskomponente D besitzt z.B. die Formel IX

$$A{-}Z{-}A^1 \quad (IX)$$
$$(A^2)_x$$

worin x die Zahl O, 1, 2 oder 3, vorzugsweise O, ist und A, $A^1$ und $A^2$ gleiche oder verschiedene Reste der Formel $-CH_2A^3$ oder einen Epoxidrest (Oxiranrest) der Formeln X oder XI

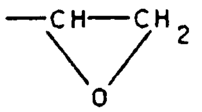

(X)

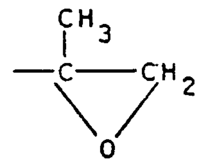

(XI)

bedeuten. $A^3$ ist ein als Anion abspaltbarer Substituent, insbesondere Chlor, Brom oder Iod, oder eine als Anion abspaltbare Gruppe, wie z.B. Hydroxyl, ein Sulfatorest, eine Phospatorest und Z steht für eine direkte Bindung oder für einen (x+2)-valenten organischen Rest.

Z kann eine aliphatischer, aromatischer oder araliphatischer Rest sein, wobei aliphatische und araliphatische Reste auch Ketogruppen —CO— oder Heteroatome, wie —O— oder —S—, oder Heteroatomgruppierungen, wie —SO—, $-SO_2-$, —NH—, $-N(CH_3)-$ enthalten können. Für Z ist in Übereinstimmung mit der bevorzugten Bedeutung von x = O ein zweiwertiger Rest bevorzugt, so daß als polyfunktionelle Alkylierungskomponente D eine bifunktionelle Alkylierungskomponente bevorzugt ist. Besonders bevorzugte bifunktionelle Alkylierungsmittel entsprechen der Formel XII

$$A{-}Z^1{-}A^1 \qquad (XII)$$

worin $Z^1$ eine direkte Bindung, einen Phenylenrest, insbesondere einen 1,4-Phenylenrest, oder einen Rest der Formel $-(CH_2)_y-$ oder $-(CH_2)_k-G-(CH_2)_l-$ darstellt, wobei y eine Zahl von 1 bis 6, k und l Zahlen von 1 bis 6 und G —O—, —S—, $-SO_2-$, —NH—, $-N(CH_3)-$, —CO—, —CHOH— oder Phenylen, insbesondere 1,4-Phenylen, bedeutet. Vorzugsweise sind k und l gleich und bedeuten vorzugsweise 1 oder 2, insbesondere 1.

Beispiele für bevorzugte bifunktionelle Alkylierungsmittel der Formel XII sind: Epichlorhydrin (= Chlormethyloxiran), Epibromhydrin, 1,3-Dichloro-propan-2-ol, 2,2'-Dichloro-diethylether, 2,2'-Dichlorodiethylamin, 2,2'-Dichloro-diethylsulfid, 2,2'-Dichloro-diethylsulfoxid, 2,2'-Dichloro-diethylsulfon, 2,2'-Bis-(sulfato)-ethylether, 2,2'-Bis-(phenylsulfonyloxy)-ethylether, 2,2'-Bis-(p-tolylsulfonyloxy)-ethylether, Di-epoxy-butan, Di-epoxy-2-methylbutan, Bis-glycidylamin (= Bis-(2,3-epoxy-propyl)-amin), 1,2-oder 1,4-Bis-(epoxyethyl)benzol, 1,2- oder 1,4-Bis-(2,3-epoxy-propyl)-benzol, 1,2- oder 1,4-Bis-(chlormethyl)-benzol.

Die Polyamin-Komponente E kann aus einer Komponente $E^1$ oder $E^2$ oder aus den beiden Komponenten $E^1$ und $E^2$ bestehen.

In der Formel VII der Polyaminkomponente $E^1$ bedeutet s vorzugsweise die Zahl 2. In diesem Fall sind bevorzugte geeignete Vertreter der Polyamin-Komponente $E^1$ der Formel VII handelsübliche Polyethylenimine mit einem Molekular gewicht zwischen 2000 und 27000, vorzugsweise zeischen 2000 und 20000, besonders bevorzugt zwischen 2000 und 5000. Derartige Polyethylenimine sind handelsüblich. Sie werden durch Polymerisation von Ethylenimin hergestellt und enthalten etwa 50 bis 600 Ethylenimineinheiten und üblicherweise primäre, sekundäre und tertiäre Stickstoffatome in einem zahlenmäßigen Verhältnis von etwa 1:2:1. Die verschiedenen Stickstoffatome sind im Molekül statistisch verteilt. Sie werden bei dem Verfahren zur Herstellung der vernetzten Copolymerisate vorzugsweise direkt in Form ihrer handelsüblichen wäßrigen Lösungen eingesetzt.

In der Polyamin-Komponente $E^2$ der Formel VIII kann der für $R^{22}$ stehende Alkylenrest verzweight oder vorzugsweise geradkettig sein. Bei einem für $R^{22}$ stehenden Phenylenrest handelt es sich vorzugsweise um einen 1,4- oder 1,2-Phenylenrest. Die Verbindungen der Formel VIII stellen Umsetzungsprodukte von Aminen der Formel XIII

$$H_2N-(CH_2)_u-NH\left[-(CH_2)_u-NH\right]_w-H \qquad (XIII)$$

mit Dicarbonsäuren der Formel XIV

$$HOOC{-}R^{22}{-}COOH \qquad (XIV)$$

im Molverhältnis 1: (0.5 bis 1) dar. u bedeutet vorzugsweise 2 oder 3 und w vorzugsweise 1, 2 oder 3.

Bevorzugte Amine der Formel XIII sind z.B.:

$H_2N—CH_2—CH_2—NH—CH_2—CH_2—NH_2$,

$H_2N—CH_2—CH_2—CH_2—NH—CH_2—CH_2—CH_2—NH_2$,

$H_2N—CH_2—CH_2—NH—CH_2—CH_2—NH—CH_2—CH_2—CH_2—NH_2$,

$H_2N—CH_2—CH_2—NH—CH_2—CH_2—NH—CH_2—CH_2—NH—CH_2—CH_2—NH_2$.

Geeignete Dicarbonsäuren der Formel XIV sind z.B. Oxalsäure, Malonsäure, Bernsteinsäure, Glutarsäure, Adipinsäure, Pimelinsäure, Korksäure, Azelainsäure, Sebacinsäure, Phthalsäure und Isophthalsäure.

In dem erfindungsgemäßen Copolymerisat beträgt das Molverhältnis A:B:C vorzugsweise = 1:(0,02 bis 2,5):O. Es sind solch erfindungsgemäßen vernetzten Copolymerisate bevorzugt, bei denen das Molverhältnis $B^1$:D:E = 1:(0,002 bis 1):(0,05 bis 5), vorzugsweise 1:(0,01 bis 1):(0,1 bis 4,5), beträgt.

Die zur Herstellung der erfindungsgemäßen Copolymerisate erforderlichen Ausgangskomponenten sind bekannt oder können nach Verfahren hergestellt werden, die für die jeweilige Substanzklasse bekannt sind.

Die Herstellung der erfindungsgemäßen wasserslöslichen Copolymerisate durch Copolymerisation der Diallyl-Komponente A, der Amid-Komponente B und der (Meth)Acrylester-Komponente C erfolgt in einem geeigneten Lösungsmittel. Geeignete Lösungsmittel sind Wasser und mit Wasser mischbare Lösungsmittel, wie z.B. niedere Alkohole, wie z.B. Methanol, Ethanol, n-Propanol, i-Propanol, N-Butanol, tert.-Butanol, Glykole, wie z.B. Ethylenglykol, Propylenglykol, Di- und Polyglykole wie z.B. Diethylenglykol, Triethylenglykol, Glykolether, wie z.B. Diethylenglykol-mono-methyl-ether, Diethylenglykol-mono-ethyl-ether, Ethylenglykol-mono-methyl-ether, Ethylenglykol-mono-ethyl-ether, Ethylenglykol-mono-n-propylether, Ethylenglykol-mono-n-butyl-ether, Ethylenglykol-di-methyl-ether, Ethylenglykol-di-ethyl-ether, Ketone, wie z.B. Aceton oder Methyl-ethyl-keton.

Die Copolymerisation kann auch in einem Gemisch vershiedener Lösungsmittel durchgeführt werden, vorzugsweise in einem Lösungsmittelgemisch, das geringe Mengen Wasser enthält. Falls z.B. die Diallylammonium-Komponente A in Form einer wäßrigen Lösung eingesetzt wird, ist normalerweise ein weiterer Wasserzusatz nicht erforderlich.

Vor Beginn der Copolymerisation ist es zweckmäßig, den pH-Wert von 3 bis 8,5 einzustellen. Für diese pH-Werteinstellung wird in der Regel eine Säure, vorzugsweise eine organische Säure, insbesondere Essigsäure, verwendet.

Die Copolymerisation wird bei Temperaturen von 40 bis 100°C, vorzugsweise 60 bis 90°C, ganz besonders bevorzugt bei Temperaturen von 65 bis 85°C, durchgeführt und in üblicher Weise, z.B. durch Zugabe geeigneter Initiatoren, gestartet. Geeignete Initiatoren sind radikalbildende Substanzen, wie z.B. Benzoylperoxid, tert.Butylhydroperoxid, Cumolperoxid, Methylethylketonperoxid, Laurylperoxid, tert. Butylperbenzoat, ditert.Butylperphthalat, Azodiisobutyronitril, 2,2'-Azobis-(2,4-dimethylvaleronitril), 2-Phenyl-azo-2,4-dimethyl-4-methoxy-valeronitril, 2-Cyano-2-propyl-azoformamid, Azodiisobutyramid, Dimethyl-, Diethyl- oder Di-n-butyl-azobis-methylvalerat, tert-Butyl-perneodecanoat, Di-isononanoyl-peroxid, tert.-Amyl-perpivalat, Di-2-ethylhexyl-peroxydicarbonat, Di-lauroylperoxid, Di-isotridecylperoxydicarbonat, tert.-Butylperoxy-isopropylpercarbonat. Vorzugsweise wird als Initiator 2,2'-Azobis-(2-amidinopropan)-dihydrochlorid verwendet. Bezogen auf die Monomerenmenge der Komponenten A + B + C werden 0,01 bis 2 Gew.-%, vorzugsweise 0,1 bis 1 Gew.-% Initiator angewandt. Es ist zweckmäßig, die Copolymerisation unter Ausschluß von Sauerstoff durchzuführen. Dies kann in an sich bekannter Weise durch Spülen bzw. Durchleiten eines Inertgases, wie z.B. Stickstoff, erfolgen. Die Komponenten A, B, C, die jeweils aus einer oder mehreren Einzelkomponenten bestehen können, werden in solchen Mengen eingesetzt, daß das Molverhältnis A:B:C = 1:(0,002 bis 4,5):(O bis 0,5), vorzugsweise 1:(0,02 bis 2,5):O beträgt.

Die Copolymerisation ist nach ca. 30 min bis ca. 4 h, in vielen Fällen nach 30 min bis $2\frac{1}{2}$ h, beendet. Nach Beendingung der Copolymerisation liegt normalerweise eine ca. 15 bis 55 gew.%ige Lösung vor.

Zur Durchführung der Vernetzungsreaktion wird die bei der Copolymerisation anfallende Lösung in Anwesenheit von Wasser mit einer polyfunktionellen Alkylierungskomponente D und vorzugsweise zusätlich mit einer Polyamin-Komponente E umgestzt. Die Polyamin-Komponente E kann dabei aus einer Polyamin-Komponente $E^1$ oder $E^2$ oder aus einem Gemisch dieser Komponenten bestehen. Falls bei der Vernetzung eine Polyamin-Komponente E zum Einsatz kommt, wird sie der wäßrigen Lösung des zu vernetzenden Copolymerisats vor der polyfunktionellen Alkylierungskomponente D zugegeben. Bezogen auf 1 mol der im unvernetzten Copolymerisat einpolymerisierten basischen Komponente $B^1$ beträgt das Molverhältnis $B^1$:D:E bei der Vernetzungsreaktion 1:(0,002 bis 2):(0 bis 5), vorzugsweise 1:(0,002 bis 1):(0,5 bis 5), besonders bevorzugt 1:(0,01 bis 1):(0,1 bis 4,5). Die Vernetzung wird bei Temperaturen von 30 bis 90°C, vorzugsweise von 40 bis 60°C, durchgeführt und wird bereits nach wenigen Minuten, z.B. 5 bis 20 min, vorzugsweise 5 bis 10 min, durch Zugabe einer Mineralsäure, wie z.B. Salzsäure, Schwefelsäure, Phosphorsäure oder Salpetersäure beendet. Dabei wird durch die Zugabe der Mineralsäure ein pH-Wert von 4 bis 7 eingestellt.

Die bei der Herstellung anfallenden Lösungen des vernetzten Copolymerisats besitzen einem Wirkstoffgehalt von ca. 25 bis 55 Gew.-% und können direkt in dieser Form, vorzugsweise aber nach Verdünnung auf einen Wirkstoffgehalt von ca. 25 bis 35 Gew.%, als Textilhilfsmittel eingesetzt werden.

Die bei der Herstellung anfallenden Lösungen der erfindungsgemäßen vernetzten Copolymerisate

können in Wasser entweder echt, zumindest aber killoidal, gelöst werden. Sie sind hervorragend als Textilhilfsmittel, insbesondere zur Echtheitsverbesserung von Färbungen und Drucken von Reaktivfarbstoffen auf Zellulosematerialien, geeignet.

Normalerweise erfolgt die erfindungsgemäße Nachbehandlung von Reaktivfärbungen und -drucken in einem Flottenverhältnis von 1:5 bis 1:3, vorzugsweise 1:10 bis 1:20. Dabei wird eine Flotte eingesetzt, die pro Liter 0,5 bis 6 g, vorzugsweise 1 bis 3 g des erfindungsgemäßen Copolymerisats enthält. In speziellen Fällen können selbstverständlich Flottenverhältnis und Hilfsmittelkonzentration über die angegebenen normalen Grenzen hinaus variiert werden. Die gewünschten Echtheitsverbesserungen werden im Grund dann erzielt, wenn das Copolymerisat in Form der bei der Herstellung anfallenden ca. 25 bis 55 gew.%igen Lösung in einer Aufwandsmenge von 0,5 bis 10%, vorzugsweise 1 bis 8%, insbesondere 2 bis 6%, des Warengewichts appliziert wird. Zweckmäßigerweise wird die Nachbehandlung bei Temperaturen von Raumtemperatur bis 100°C, vorzugsweise bis 60°C, besonders bevorzugt bei Raumtemperatur, durchgeführt. Anschließend braucht nur noch einmal gesült zu werden. Es wird eine deutliche Verbesserung der Echtheiten, insbesondere der naß- und Reibechtheiten, erzielt.

Das erfindungsgemäße Copolymerisat ist auch zur Echtheitsverbesserung von Färbungen und Drucken mit Substantiv- und Küpenfarbstoffen geeignet. Es wird dabei in gleicher Weise eingesetzt wie bei der Echtheitsverbesserung von Färbungen und Drucken mit Reaktivfarbstoffen. Es kann insbesondere auch als echheitsverbesserndes Hilfsmittel beim gleichzeitigen quasi einbadigen Schlichten und Färben von Zellulosematerialien mit Küpenfarbstoffen eingesetzt werden. Dabei wird das Copolymerisat in Form der bei der Herstellung anfallenden ca. 25 bis 55 gew.-%igen Lösung den Schlichtefärbeflotten in der Regel in Mengen von 20 bis 80 g/l, vorzugszweise 30 bis 60 g/l, zugesetzt. Ein höherer Zusatz ist dabei zwar möglich, ist aber in der Regel nicht erforderlich. Geringere als die angegebenen Zusatzmengen können in Einzelfällen auch ausreichen, z.B. wenn sehr helle Nuancen gefärbt werden oder nicht ganz so hohe Anforderungen an die Echtheitsverbesserung gestellt werden. Das quasi einbadige Schlichtfärbeverfahren unter Verwendung des erfindungsgemäßen Copolymerisats wird nach den an sich bereits bekannten Schlichte- bzw. Schlichtfärbeverfahren und in den dazu eingesetzten Aggregaten durchgeführt. So wird das zu verarbeitende Fasermaterial der Reihe nach durch die vorhandenen Tränktröge des Aggregats geführt, anschliessend getrocknet und dem Faservorrat der Weiterverarbeitungsmaschine zugeführt. Zwischen den Tränktrögen des Schlichtfärbeaggregats sind normalerweise mehr oder weniger lange Luftgänge eingeschaltet, deren Länge in bekannter Weise so bemessen wird, daß die für den eingesetzten Farbstoff erforderliche Färbezeit erreicht wird. Die Trocknung des in den Tränktrögen imprägnierten Garns erfolgt durch Hitzezufuhr, in der Regel durch Kontakthitze über Trockenwalzen und führt im allgemeinen zu einer Vervollständigung des Färbeprozesses und einer vollständigen Farbstoff-Fixierung auf dem Substrat. Bei der Durchführung des quasi einbadigen Schlichtfärbeverfahrens unter Verwendung des erfindungsgemäßen Copolymerisats ist es von besonderem Vorteil, wenn anstelle der in den meisten Aggregaten üblichen 3 Tränktrögen zusätzlich ein vierter Tränktrog eingeschaltet wird. Die Tränktröge werden in an sich üblicher Weise mit der Schlichtfärbeflotte beschickt, wobei die Konzentration des Schlichtmittels in der Flotte sich nach der Menge des für den Weiterverarbeitungsprozeß erforderlichen Schlichtauftrags und nach der Faserbeschaffenheit richtet. Die Farbstoffkonzentration richtet sich bei gegebener Flottenaufnahme, die normalerweise zwischen 100 und 200% liegt, nach der gewünschten Farbtiefe. In der Regel enthalten die Flotten 30 bis 80 g pro Liter Schlichtemittel und 10 bis 50 g pro Liter des Farbstoffs. Hierbei ist es zweckmäßig, die Farbstoffkonzentration im ersten Tränktrog etwas höher zu wählen als in den folgenden und dafür die Konzentration des Schlichtemittels in den letzten Trögen höher zu setzen als in den vorangehenden. Bei Einsatz von 4 Tränktrögen ist es vorteilhaft, im 4. Tränktrog ohne Farbstoffzusatz zu arbeiten. Zweckmäßigerweise wird in den Bädern, die höhere Farbstoffkonzentrationen aufweisen, die Konzentration des erfindungsgemäßen Copolymerisats etwas niedriger gehalten und in Bädern, die geringere Farbstoffkonzentrationen aufweisen, eine etwas höhere Hilfsmittelkonzentration benutzt. So werden die Hilfsmittelkonzentrationen im ersten Bad vorzugsweise zwischen 0 und 20 g/l, die im letzten Bad im Bereich von 20 bis 60 g/l eingestellt.

Als Schlichtemittel kommen alle üblicherweise eingesetzten Produkte in Betracht, wie z.B. Stärke und Stärkederivate, Schlichtemittel auf Basis von Carboxymethylcellulose, Vinylhomo-oder -copolymere, Acrylatcopolymerisate oder wasserlösliche Polyester. Vorzugsweise werden die für Cellulosematerialien besonders geeigneten Mittel eingesetzt, insbesondere solche auf Basis von Stärke und Stärkederivaten, Carboxymethylcellulose. Besonders bevorzugt als Schlichtemittel sind Stärke und Stärkederivate.

Als Farbstoffe für das Schlichtfärbeverfahren kommen Küpenfarbstoffe, die sich im "Colour-Index", dritte Auflage, Band 3, Seiten 3727—3837 finden, in Betracht.

Die Küpenfarbstoffs werden den Schlichtfärbeflotten in ihrer reduzierten und damit wasserlöslichen Form zugegeben. Konzentrierte wäßrige Lösungen der durch Reduktion wasserlöslich gemachten Küpenfarbstoffe werden im folgenden insbesondere in den Ausführungsbeispielen als Stammküpe beziechnet. Die Herstellung dieser Stammküpen ist bekannt. Sie erfolgt durch Erwärmen von wäßrigen Dispersionen der an sich wasserunlöslichen Küpenfarbstoffe mit Reduktionsmitteln, wobei in der Regel Natriumdithionit ("Hydrosulfit") eingesetzt wird.

Neben den verküpten bzw. reduzierten Farbstoffen, den bekannten Schlichtemitteln und den erfindungsgemäß einzusetzenden echtheitsverbessernden Hilfsmitteln können die Schlichtfärbeflotten auch noch weitere Hilfs- und Zusatzstoffe enthalten, wie sie aus üblichen Färbeverfahren bekannt sind.

Insbesondere ist es vorteilhaft, den Flotten bekannte Färbebeschleuniger und Netz- und Dispergiermittel in den üblichen Konzentrationen zuzufügen. Ferner können auch erforderlichenfalls Reduktionsmittel zugesetzt werden, die die Reoxydation der verküpten Farbstoffe verhindern.

Durch die Verwendung der erfindungsgemäßen Copolymerisate wird eine sehr erhebliche Verbesserung der Naßechtheiten der Schlichtfärbungen erzeilt. Darüber hinaus resultiert auch eine verbesserte Beschlichtung des Garns durch bessere Filmbildung des Schlichtemittels Schließlich läßt sich auch ein gesteigerter Webnutzeffekt ermitteln.

Darüber hinaus kann das erfindungsgemäße Copolymerisat auch als Textilhilfsmittel für die Echtheitsverbesserung von Färbungen und Drucken, insbesondere mit Reaktivfarbstoffen und Substantivfarbstoffen, auf Textilien aus Cellulosefasern und deren Mischungen mit Synthesefasern eingesetzt werden, die anschließend einer Ausrüstung oder Hochveredelung unterworfen werden. Durch eine derartige Ausrüstung oder Hochveredelung wird z.B. eine Pflegeleichtausrüstung, eine Wash- and Wear-Ausrüstung, eine knitterarme und krumpfarme Ausrüstung oder eine Permanentfixierung von Kalandereffekten erzielt. Die Durchführung der Hochveredelung ist bekannt. Dabei werden die Textilmaterialien mit Reaktantharzen, wie z.B. solchen auf der Basis von N-Methylol-dihydroxy-ethylenharnstoff oder von N-Dimethylol-dihydroxy-ethylenharnstoff behandelt, die in Gegenwart von Säurespendern mit den Hydroxylgruppen der Cellulosefasern vernetzen. Das Textilmaterial wird dabei mit einer Hochveredelungsflotte behandelt, die das Reaktantharz in Mengen von ca. 30 bis 250 g/Liter, Katalysator, wie z.B. Zinkchlorid oder Magnesiumchlorid und gegebenenfalls noch andere Hilfsmittel, Additive, Weichmacher, Füllmittel und/oder Hydrophobierungsmittel enthält. Einer derartigen Hochveredelungsflotte wird das erfindungsgemäße Copolymerisat in Form der bei der Herstellung anfallenden 25 bis 55 gew.%igen Lösung in Mengen von z.B. 10 bis 70 g/Liter, vorzugsweise 20 bis 50 g/Liter, zugesetzt. Das mit der Hochveredelungsflotte behandelte Material wird dann getrocknet. Anschließend wird das Reaktantharz auf der Ware bei erhöhter Temperatur auskondensiert. Die Kondensation erfolgt üblicherweise $3\frac{1}{2}$ bis 4 Minuten bei 150°C oder 60 bis 30 Sekunden bie 170 bis 185°C. Ein Nachwaschvorgang wird normalerweise nicht durchgeführt. Durch Anwendung der erfindungsgemäßen Copolymerisate im Rahmen einer Hochveredelung werden die Echtheiten, insbesondere die Naßechtheiten, zum Teil erheblich verbessert.

In den nachfolgenden Beispielen sind Temperaturen in Celsiusgraden angegeben. Wenn nichts anderes angegeben ist, bedeuten Teile Gewichtsteile und Prozente Gewichtsprozente.

## Beispiel 1

In einem 700 ml 4-Halskolben, der mit einem Ankerrührer, Thermometer, Rückflußkühler, Gaseinleitungsrohr und Tropftrichter versehen ist, werden 122,5 g Ethanol, 150 g einer 60%igen wäßrigen Lösung von Dimethyl-diallyl-ammoniumchlorid, 10 g Dimethylaminopropylmethacrylamid und 3,5 g Essigsäure vorgelegt. Nun wird unter Durchleiten von Stickstoff die Lösung auf 70 bis 75°C Innentemperature hochgeheizt und bei 60 bis 65°C, 0,2 g des Initiators 2,2'-Azobis-(2-amidinopropan)-dihydrochlorid zugesetzt. Bei 76 bis 77°C setzt die Copolymerisation ein. Anschließend wird 2 h bei 76 bis 77°C Innentemperatur weitergerührt. Nun werden 22,2g eines handelsüblichen Polyethylenimins mit einem durchschnittlichen Molekulargewicht von 3000 bis 5000 in Form einer 50%igen wäßrigen Lösung und anschließend 0,536 g Epichlorhydrin zugefügt und 15 min bei 78°C weitergerührt. Dann wird die Vernetzung durch Zugabe von 13,8 g Schwefelsäure (im Verhältnis 1 : 1 mit Wasser verdünnt) und Einstellung auf einen pH-Wert von 7 beendet.

Anschließend wird mit Wasser auf einen Wirkstoffgehalt von 30% eingestellt.

Ausbeute: 330 g.

Der Verlauf der Copolymerisation und Vernetzung ist aus den gemessenen K-Werten der Lösung zu erkennen.

K-Wert vor der Copolymerisation: $16{,}3 \times 10^3$,

K-Wert nach der Copolymerisation: $24{,}8 \times 10^3$,

K-Wert nach der Vernetzung: $34{,}4 \times 10^3$.

## Beispiel 2

In einem 700 ml 4-Halskolben, der mit einem Ankerrührer, Thermometer, Rückflußkühler, Gaseinleitungsrohr versehen ist, werden 122,5 g Ethanol, 158,3 g einer 60%igen wäßrigen Lösung von Diallyl-dimethyl-ammoniumchlorid und 5 g Dimethylaminopropylmethacrylamid vorgelegt und unter Einleiten von Stickstoff auf 70 bis 75°C hockgeheizt. Bei 60°C werden 0,2 g tert. Butylperbenzoat zugefügt, und bei 70°C beginnt die Copolymerisation, die durch Nachrühren bei 70 bis 75°C zu Ende geführt wird. Anschließend werden 3 ml einer 1,6%igen ethanolischen Epichlorhydrinlösung zugesetzt, 5 min bei 70°C weitergerührt und nach dem Abkuhlen mit wasser auf eine 30%ige Lösung eingestellt.

## Beispiel 3

In einem 700 ml 4-Halskolben, der mit einem Ankerrührer, Thermometer, Rückflußkühler und Gaseinleitungsrohr versehen ist, werden 122,5 g Methylglykol, 83,3 g einer 60%igen wäßrigen Lösung von Dimethyl-diallyl-ammoniumchlorid, 50 g Dimethylaminoethyl-methacrylsäureester vorgelegt und mit 3,8 g Eisessig auf einen pH-Wert von 8,5 eingestellt. Anschließend wird Stickstoff eingeleitet, auf eine

Innentemperatur von 80°C hochgeheizt und bei 60°C Innentemperatur 0,2 g 2,2'-Azobis-(2-amidinopropan)-dihydrochlorid augesetzt und in dem Temperaturbereich von 76 bis 80°C copolymerisiert. Anschließend wird 2 h nachgerührt. Nun werden 22 g eines Kondensationsproduktes aus 1 mol Adipinsäure und 1 mol Diethylentriamin und danach 2,052 g Epichlorhydrin in Form einer 10%igen ethanolischen Lösung zugegeben. Nach 10 bis 20 min rühren bei 70°C ist die Vernetzung der Copolymeren beendet. Nun wird die Lösung durch die Zugabe von 1,5 g $H_2SO_4$ (1 : 1 mit Wasser verdünnt) auf einen pH-Wert von 7,0 eingestellt.

Die Ausbeute beträgt 698,7 g einer 15%igen Lösung.
K-Wert vor der Copolymerisation: 15,7 × $10^3$,
K-Wert nach der Copolymerisation und Vernetzung: 78,8 × $10^3$.

Beispiel 4

In einem 700 ml 4-Halskolben, der mit einem Ankerrührer, Thermometer, Rückflußkühler und Gaseinleitungsrohr versehen ist, werden 122,5 g i-Propanol, 83,3 g einer 60%igen Lösung von Dimethyl-diallyl-ammoniumchlorid und 50 g Dimethylaminopropylmethacrylamid vorgelegt, mit 12,9 g Eisessig auf einen pH-Wert von 8,5 eingestellt und unter Einleiten von Stickstoff auf eine Innentemperatur von 75 bis 80°C geheizt. Bei 50° werden 0,2 g 2,2'-Azobis-(2-amidinopropan)-dihydrochlorid zugesetzt. Zwischen 72 bis 74°C beginnt die Copolymerisation, die durch ein Nachrühren bei 80°C beendet wird.

Anschließend fügt man 22 g des Kondensationsprodukts aus 1 mol Adipinsäure und 1 mol Diethylentriamin in Form einer wäßrigen Lösung zu. Danach werden 0,821 g Epichlorhydrin zugesetzt und 10 min bei 50°C vernetzt.

Danach stellt man durch Zugabe von 9,8 g $H_2SO_4$ (1 : 1 mit Wasser verdünnt) einen pH-Wert von 7 ein.
Die Ausbeute beträgt 315 g in Form einer 30%igen Lösung.
K-Wert der Lösung vor der Copolymerisation: 17,3 × $10^3$,
K-Wert der Lösung nach der Copolymerisation: 30,6 × $10^3$,
K-Wert der Lösung nach der Vernetzung: 42 × $10^3$.

Beispiel 5

In einem 700 ml 4-Halskolben, der mit einem Ankerrührer, Thermometer, Rückflußkühler und Gaseinleitungsrohr versehen ist, werden 122,5 g Ethylenglykol, 150 g einer 60%igen wäßrigen Lösung von Dimethyl-diallyl-ammoniumchlorid, 10g Dimethylaminopropylmethacrylamid vorgelegt, mit 3,5 g Eisessig auf einen pH-Wert von 8,5 eingestellt und unter Einleiten von Stickstoff auf 75 bis 80°C hochgeheizt. Bei 55° werden 0,1 g 2,2'-Azobis-(2-amidinopropan)-dihydrochlorid zugesetzt. In dem Temperaturbereich von 70 bis 74°C beginnt die Copolymerisation, die durch ein Nachheizen von 2 h bei 80°C zu Ende geführt wird. Nun werden 22,2 g Polyethylenimin (50%ige wäßrige Lösung) und 30 ml Wasser sowie 0,536 g Epichlorhydrin in alkholischer Lösung zugefügt. Bei 70°C wird 20 min vernetzt und anschließend durch Zusatz von $H_2SO_4$ (1:1 mit Wasser verdünnt) und Einstellung auf einen pH-Wert von 7,0 die Reaktion unterbrochen.

Die Ausbeute beträgt 344 g einer 30%igen Copolymerlösung. Die Reaktion wird durch K-Wert Messung verfolgt:

An einer 1%igen Lösung wurden folgende Werte gefunden:
K-Wert vor der Copolymerisation: 16,3 × $10^3$,
K-Wert nach der Copolymerisation: 24,8 × $10^3$,
K-Wert nach der Vernetzung: 34,4 × $10^3$.

Anwendungsbeispiel 1

Ein abgekochter Baumwolltrikotstoff wird in einer Flotte gefärbt, die 3% C.I. Reactive Blue 89, 3% C.I. Reactive Black 5, 1 g/l eines handelsüblichen Wasserenthärtungsmittels auf der Basis Polyphosphat, 50 g/l Glaubersalz und 20 g/l Soda kalz. enthalt. Man färbt 1 h bei einer Färbetemperatur von 60°C, neutralisiert dann die Probe kalt mit Essigsäure und spült während 10 min mit heißem Wasser.

Nach einem kochenden Seifen erfolgt eine 20 minütige Behandlung bei Raumtemperatur in einer Lösung, die 5% eines erfindungsgemäßen Produktes nach Beispiel 1 oder 5, berechnet auf das Trockengewicht der Ware, enthält. Anschließend wird nur noch einmal kalt gespült. Man erhält dabei für das Anbluten von ungefärbtem Baumwollbegleitgewebe die in der nachfolgenden Tabelle in Spalte 3 angegebenen Echtheitswerte. Zum Vergleich sind in Spalte 2 die Werte für die Echtheiten angegeben, die man nur mit kochendem Seifen ohne anschließende Behandlung mit einem Textilhilfsmittel erhält. In der Spalte 4 sind zum Vergleich die Werte für die Echtheiten angegeben, die man mit 5% eines handelsüblichen Textilhilfsmittels auf der Basis eines peralkylierten Polyamins erhält.

| Echtheit | geseifte Färbung | 5% Produkt Beispiel 1 oder 5 | 5% handelsübl. Textilhilfsmittel |
|---|---|---|---|
| Wasser schwer (DIN 54006) | 4 | 5 | 5 |
| Schweiß alkal. (DIN 54020) | 4 | 5 | 4 |
| Schweiß sauer (DIN 54020) | 4 | 5 | 4 |
| Wäsche 60°C (DIN 54010) | 3 | 4 bis 5 | 3 bis 4 |
| Peroxidwäsche 60°C (DIN 54015) | 2 bis 3 | 4 | 3 |
| Wäsche 95°C (DIN 54012) | 2 | 3 bis 4 | 2 bis 3 |
| Reibechtheit: (DIN 54021) trocken | 3 | 4 | 4 |
| naß | 3 | 3 | 2 bis 3 |

Anwendungsbeispiel 2

500 m eines Viskose-Futterstoffes werden auf einem Jigger zunächst mit 2 g/l Waschmittel auf der Basis eines Umsetzungsproduktes aus 1 mol 4-Nonylphenol und 10 mol Ethylenoxid 30 min bei 60°C gewaschen, gespült und anschließend mit 4% C.I. Direct Red 23 60 min bei 60 bis 90°C unter Zusatz von 10% Natriumsulfat gefärbt. Nach dem Spülen mit kaltem Wasser und Trocknen wird das Gewebe auf einem Foulard wie folgt geklotzt:

65 g/l ®Arkofix NG konz.

(handelsübliches Hockveredelungsmittel der Firma HOECHST AG, Frankfurt/Main 80, auf der Basis von Dimethylol-dihydroxy-ethylenharnstoff. Arkofix ist ein eingetragenes Warenzeichen der HOECHST AG).

10 g/l Polyethylen-Dispersion
60 g/l Zirkoniumoxychlorid-Paraffin-Emulsion
1 ml/l Essigsäure, 60%ig,
20 g/l $MgCl_2 . 6 H_2O$
40 g/l Produkt gemäß Beispiel 5.

Das Gewebe wurde bei 110°C getrocknet und anschließend 4 min bei 150°C kondensiert. Die so behandelte und ausgerüstete Ware zeigt bei der Bestimmung der Waschechtheit für die mechanische Wäsche bei 60°C gemäß DIN 54010 die Echtheitsnote 5. Zum Vergleich sind in der nachfolgenden Tabelle auch die Echtheitsnoten angegeben, die ohne Textilhilfsmittel und mit gleichen Mengen handelsüblichem Textilhilfsmittel erhalten werden:

| Textilhilfsmittel | Wäsche 60°C (DIN 54010) |
|---|---|
| ohne | 3 |
| gemäß Beispiel 5 | 5 |
| gemäß Beispiel 1 | 5 |
| Handelspräparat 1 | 3 bis 4 |
| Handelspräparat 2 | 3 bis 4 |

Handelspräparat 1
auf der Basis von peralkyliertem Polyamin

Handelspräparat 2
auf der Basis eines Aminhydrochlorid/Dicyandiamid/Formaldehyd-Kondensationsproduktes.

Anwendungsbeispiel 3

Auf Baumwolltrikotstoff wird mit C.I. Reaktive Blue 89 eine 5%ige Färbung hergestellt und durch

Spülen, kochendes Seifen und Trocknen fertiggestellt. Die trockene Färbung wird mit folgender Ausrüstungsflotte foulardiert, die

65 g/l ®Arkofix NDS konz.
(handelsübliches Hockveredelungsmittel der Firma HOECHST AG, Frankfurt/Main 80, auf der Basis von modifiziertem N-Methylol-dihydroxy-ethylenharnstoff)
20 g/l $MgCl_2 \cdot 6H_2O$
30 g/l erfindungsgemäßes Produkt gemäß Beispiel 10
20 g/l Weichmacher Hoe-T-3492-1
(handelsüblicher Weichmacher der Firma HOECHST AG, Frankfurt/Main 80, auf der Basis eines Fettsäurekondensationsproduktes) enthält.

Anschließend wird bei 110°C getrocknet und 4 min bei 150°C kondensiert. Durch den Zusatz von dem erfindungsgemäßen Copolymerisat nach Beispiel 5 werden die Wasserechtheit (schwere Beanspruchung) gemäß DIN 54006 und die Echtheiten gegenüber saurem und alkalischem Schweiß gemäß DIN 54020 gegenüber einer Ware ohne Nachbehandlung um 1 Note angehoben, wie aus der folgenden Tabelle hervorgeht.

| Echtheit | ohne Hilfsmittel | mit Produkt gemäß Beispiel 1 |
|---|---|---|
| Wasserechtheit schwer (DIN 54006) | 3 bis 4 | 5 |
| Schweiß sauer (DIN 54020) | 4 | 5 |
| Schweiß alkal. (DIN 54020) | 4 | 5 |

Außerdem ist zu vermerken, daß die Naßlichtechtheiten gegenüber beim Einsatz handelsüblicher Dicyandiamid/Formaldehyd-Kondensationsprodukten oder peralkylierten Polyaminen nicht herabgesetzt werden.

## Anwendungsbeispiel 4

Ein 4%ige Färbung von C.I. Reactive Orange 82 auf Baumwollstoff wird durch Spülen, kochendes Seifen und Trocknen fertiggestellt und in trockenem Zustand mit einer Ausrüstungsflotte foulardiert, die

65 g/l ®Arkofix NG konz.
(handelsüblicher Katalysator der Firma HOECHST AG, Frankfurt/Main 80, auf der Basis von Metallsalzen)
15 g/l $MgCl_2 \cdot 6\ H_2O$
20 g/l ®Leomin NI
(handelsüblicher Weichmacher der Firma HOECHST AG, Frankfurt/Main 80, auf der Basis eines Fettsäurekondensationsproduktes. Leomin ist ein eingetragenes warenzeichen der HOECHST AG.)
30 g/l des Produkts gemäß Beispiel 3 enthält. Anschließend wird bei 110°C getrocknet und 4 min bei 150°C kondensiert. Durch den Einsatz des erfindungsgemaßen Copolymerisats werden die Wasser- und Schweißechtheiten deutlich verbessert, ohne daß die Naßlichtechtheiten verschlechtert werden.

## Anwendungsbeispiel 5

Ein 4%ige Färbung von C.I. Reactive Orange 82 auf Baumwollstoff wird durch Spülen, und kochendes Seifen und Trocknen fertiggestellt und in trockenem Zustand mit einer Ausrüstungsflotte foulardiert, die

65 g/l ®Arkofix NDS konz.
(handelsübliches Hochveredelungsmittel der Firma HOECHST AG, Frankfurt/Main 80, auf der Basis von modifiziertem N-Methylol-dihydroxy-ethylenharnstoff)
20 g/l Katalysator 3282
(handelsüblicher Katalysator der Firma HOECHST AG, Frankfurt/Main 80, auf der Basis von Metallsalzen)
20 g/l des Weichmachers Hoe-T-3492-1
(handelsüblicher Weichmacher der Firma HOECHST AG, Frankfurt/Main 80, auf der Basis eines Fettsäurekondensationsproduktes)

enthält. Anschließend wird bei 110°C getrocknet und 4 min bei 150°C kondensiert. Zum Vergleich wird eine Ware hergestellt, die noch zusätzlich 30 g/l der erfindungsgemaßen Copolymerlösung nach Beispiel 5 enthält.

Gegenüber der Ware ohne das erfindungsgemäße Copolymer des Beispiels 5 werden die Schwerwasserechtheiten und die Schweißechtheiten sauer und alkalisch um eine Note verbessert, ohne daß die Naßlichtechtheiten verschlechtert werden.

Anwendungsbeispiel 6

Eine 4%ige Färbung von C.I. Reactive Blue 89 auf Baumwollstoff wird durch Spülen, kochendes Seifen und Trocknen fertiggestellt und in trockenem Zustand mit einer Ausrüstungsflotte foulardiert, die

65 g/l ®Arkofix NG konz.
(handelsübliches Hochveredelungsmittel der Firma HOECHST AG, Frankfurt/Main 80, auf der Basis von Dimethylol-dihydroxy-ethylenharnstoff)

15 g/l $MgCl_2 \cdot 6\ H_2O$

20 g/l ®Leomin NI
(handelsüblicher Weichmacher der Firma HOECHST AG, Frankfurt/Main 80, auf der Basis eines Fettsäurekondensationsproduktes)

enthält. Anschließend wird bei 110°C getrocknet und 4 min bei 150°C kondensiert. Zum Vergleich wird noch eine Ware hergestellt, die zusätzlich 30 g/l der erfindungsgemäßen Copolymerisat nach Beispiel 4 enthält.

Durch die Anwendung der erfindungsgemäßen Copolymerlösung nach Beispiel 4, werden die Schwerwasserechtheit und die Schweißechtheiten um eine Note angehoben, ohne daß die Naßlichtechtheiten verschlechtert werden.

Anwendungsbeispiel 7

Abgekochtes und gebleichtes Baumwollgarn wird in einer Flotte gefärbt, die

2% C.I. Reactive Red 123
2% C.I. Reactive Red 124
1 g/l eines handelsüblichen Wasserenthärtungsmittels auf der Basis Polyphosphat 25 g/l glaubersalz enthält. Man färbt 10 min bei 40°C, setzt weitere 25 g/l Glaubersalz und nach weiteren 30 min 20 g/l Soda zu. Nach einer weiteren Stunde ist die Färbung beendet.

Nach dem Färben wird wie üblich kalt mit Essigsäure neutralisiert, gespült und mit 5% des Produktes (bezogen auf das Trockengewicht) des Beispiels 3 während 20 min bei pH 6 behandelt.

Man erhält eine Färbung mit deutlich verbesserten Echtheiten, die über das Anbluten von ungefärbtem Baumwoll-Begleitgewebe bestimmt werden:

| Echtheit | ungeseifte Färbung | 5% Produkt Beispiel 3 | handelsübl. Hilfsmittel* |
|---|---|---|---|
| Wasser schwer (DIN 54006) | 2 bis 3 | 3 bis 4 | 2 bis 3 |
| Schweiß alkal. (DIN 54020) | 2 | 4 | 2 |
| Schweiß sauer (DIN 54020) | 2 | 4 | 2 |
| Wäsche 60°C (DIN 54010) | 3 | 4 | 3 |
| Wäsche 95°C (DIN 54012) | 2 bis 3 | 4 | 3 |

*Als handelsübliches Hilfsmittel wurde eines auf der Basis von peralkyliertem Polyamin verwendet.

In gleicher Weise werden Verbesserungen erhalten, wenn die färbungen nach dem PAD-Steam, PAD-Jigg oder Kaltverweilverfahren hergestellt werden.

**Patentansprüche für die Vertragsstaaten: BE CH DE FR GB IT LI NL**

1. Copolymerisat herstellbar durch Copolymerisation
a) einer Diallylammonium-Komponente A der Formel I

$$\left[CH_2 = \overset{\overset{\large R^3}{|}}{C} - CH_2 - \underset{\underset{\large R^2}{|}}{\overset{\overset{\large R^1}{|}}{N}} - CH_2 - \overset{\overset{\large R^4}{|}}{C} = CH_2\right]^{\oplus} Y^{\ominus} \qquad (I)$$

und

b) einer Amid-Komponente B, die aus einer basischen Komponente $B^1$ der Formel II

$$R^5-\underset{}{\overset{\overset{\large R^6}{|}}{N}}-(CH_2)_m-X-CO-(CH_2)_n-\overset{\overset{\large R^7}{|}}{C}=CHR^8 \qquad (II)$$

und/gegebenenfalls einer Amid-Komponente $B^2$ der formel III

$$R^9-\overset{R^{10}}{\overset{|}{N}}-CO-(CH_2)_p-\overset{R^{11}}{\overset{|}{C}}=CHR^{12} \qquad (III)$$

und/oder einer N-Vinylacylamid-Komponente $B^3$ der Formel IV

$$CH_2=CH-\overset{R^{13}}{\overset{|}{N}}-CO-R^{14} \qquad (IV)$$

und/oder einer Ammonium-Komponente $B^4$ der Formel V

$$\left[R^{16}-\underset{R^{17}}{\underset{|}{\overset{R^{15}}{\overset{|}{N}}}}-(CH_2)_q-X-CO-(CH_2)_r-\overset{R^{18}}{\overset{|}{C}}=CHR^{19}\right]^{\oplus} Z^{\ominus} \qquad (V)$$

besteht und

c) einer (Meth)Acrylester-Komponente C der Formel VI

$$CH_2=\overset{R^{20}}{\overset{|}{C}}-COOR^{21} \qquad (VI)$$

im Molverhältnis A:B:C = 1:(0,002 bis 4,5):(0 bis 0,5) und anschließender Vernetzung mit

d) einer polyfunktionellen Alkylierungskomponente D und

e) einer Polyamin-Komponente E, die aus einer Polyamin-Komponente $E^1$ der Formel VII

$$H_2N-(CH_2)_s\left[NH-(CH_2)_s-\underset{T}{\underset{|}{N}}-(CH_2)_s\right]_t NH_2 \qquad (VII)$$

und/oder einer Polyamin-Komponente $E^2$ der Formel VIII

$$HOOC-R^{22}CO-NH-(CH_2)_u-NH\left[(CH_2)_u-NH\right]_w R^{23} \qquad (VIII)$$

besteht,

im Molverhältnis $B^1$:D:E = 1:(0,002 bis 2):(0 bis 5), wobei bedeuten:

$R^1$, $R^2$, $R^5$, $R^6$, $R^{21}$ = $(C_1—C_{10})$Alkyl,

$R^3$, $R^4$, $R^7$, $R^8$, $R^{11}$, $R^{12}$, $R^{18}$, $R^{19}$, $R^{20}$ = Wasserstoff oder Methyl,

$R^9$, $R^{10}$, $R^{13}$ = Wasserstoff oder $(C_1—C_8)$Alkyl,

$R^{14}$, $R^{15}$, $R^{16}$, $R^{17}$ = $(C_1—C_8)$Alkyl oder

$R^{13}$ und $R^{14}$ zusammen = $—(CH_2)_3—$, $—(CH_2)_4—$ oder $—(Ch_2)_5—$,

$R^{22}$ = ein Alkylenrest mit 1 bis 8 C-Atomen oder Phenylen,

$R^{23}$ Wasserstoff oder den Rest —CO—$R^{22}$—COOH,

X = —NH— oder —O—,

$Y^{\ominus}$, $Z^{\ominus}$ = ein einwertiges Anion oder ein einem enwertigen Anion äquivalenter Teil eines mehrwertigen Anions,

T = $\left[(CH_2)_s—NH\right]_v H$

m, q = eine der Zahlen 2, 3, 4, 5, 6, 7, 8, 9 10,

n, p, r, w = eine der Zahlen 0, 1, 2 oder 3,

s, u = eine der Zahlen 2, 3, 4 oder 5,

v = die Zahl 0 oder eine so große Zahl, daß die Polyamin-Komponente $E^1$ unter Berücksichtigung von t ein Molgewicht von 1000 bis 30000 besitzt,

t = eine so große Zahl, daß unter Berücksichtigung von v das Molgewicht der Polyamin-Komponente $E^1$ der Formel VIII zwischen 1000 und 30000 liegt.

2. Copolymerisat nach Anspruch 1, dadurch gekennzeichnet, daß $R^1$, $R^2$, $R^5$, $R^6$, $R^{14}$, $R^{15}$, $R^{16}$ und/oder $R^{17}$ = $(C_1—C_4)$Alkyl bedeuten.

3. Copolymerisat nach Anspruch 1 und/oder 2, dadurch gekennzeichnet, daß $R^3$ und/oder $R^4$ = Wasserstoff und/oder $R^9$, $R^{10}$ und/oder $R^{13}$ = Wasserstoff oder $(C_1—C_4)$Alkyl bedeuten.

4. Copolymerisat nach einem oder mehreren der Ansprüche 1 bis 3, dadurch gekennzeichnet, daß n und/oder p und/oder r = 0 bedeuten.

5. Copolymerisat nach einem oder mehreren der Ansprüche 1 bis 4, dadurch gekennzeichnet, daß das Molverhältnis A:B:C=1:(0,02 bis 2,5):0 beträgt.

6. Copolymerisat nach einem oder mehreren der Ansprüche 1 bis 5, dadurch gekennzeichnet, daß das Molverhältnis $B^1$:D:E = 1:(0,002 bis 1):(0,05 bis 5) beträgt.

7. Verfahren zur Herstellung des in einem oder mehreren der Ansprüche 1 bis 6 angegebenen Copolymerisats, dadurch gekennzeichnet, daß

a) eine Diallylammonium-Komponente A der Formel I und

b) eine Amid-Komponente B, die aus einer basischen Komponente $B^1$ der Formel II und gegebenenfalls einer Amid-Komponente $B^2$ der Formel III und/oder einer N-Vinylacylamid-Komponente $B^3$ der Formel IV und/oder einer Ammonium-Komponente $B^4$ der Formel V besteht, und

c) eine (Meth)Acrylester-Komponente C der Formel VI im Molverhältnis A:B:C = 1:(0,002 bis 4,5):(0 bis 0,5) in Wasser oder in einem mit Wasser mischbaren Lösungsmittel bei Temperaturen von 40 bis 100°C copolymerisiert werden und anschließend im wäßrigen Medium mit

d) einer polyfunktionellen Alkylierungskomponente D und

e) einer Polyamin-Komponente E, die aus einer Polyamin-Komponente $E^1$ der Formel VII und/oder einer Polyamin-Komponente $E^2$ der Formel VIII besteht, im Molverhältnis $B^1$:D:E = 1:(0,002 bis 2):(0 bis 5) bei Temperaturen von 30 bis 80°C umgesetzt werden.

8. Verfahren nach Anspruch 7, dadurch gekennzeichnet, daß das Molverhältnis A:B:C = 1:(0,02 bis 2,5):O und/oder das Molverhältnis $B^1$:D:E =1:(0,002 bis 1):(0,05 bis 5) beträgt.

9. Verwendung des Copolymerisats eines oder mehrerer der Ansprüche 1 bis 6 als Textilhilfsmittel, insbesondere als Textilhilfsmittel zue Echtheitsverbesserung von Färbungen und Drucken mit Reaktivfarbstoffen und/oder mit Substantivfarbstoffen und/oder Küpenfarbstoffen.

10. Verwendung des Copolymerisats eines oder mehrerer der Ansprüche 1 bis 6 als Textilhilfsmittel zur Echtheitsverbesserung beim quasi einbadigen Schlichten und Färben von Zellulosematerialien mit Küpenfarbstoffen oder als Textilhilfsmittel zur Echtheitsverbesserung von Färbungen und Drucken auf Zellulosematerialien, die einer Ausrüstung oder Hockveredelung unterworfen werden.

**Patentansprüche für die Vertragsstaaten: AT ES**

1. Verfahren zur Herstellung eines Copolymerisats, dadurch gekennzeichnet, daß

a) eine Diallylammonium-Komponente A der Formel I

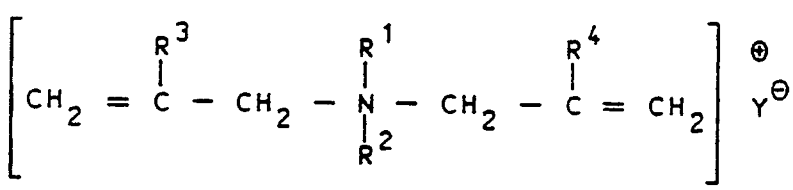

(I)

und

b) eine Amid-Komponente B, die aus einer basischen Komponente $B^1$ der Formel II

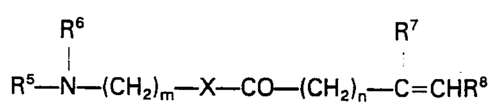

(II)

und gegebenenfalls einer Amid-Komponente $B^2$ der formel III

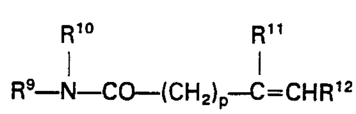

(III)

und/oder einer N-Vinylacylamid-Komponente $B^3$ der Formel IV

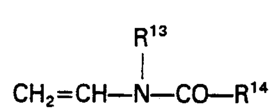

(IV)

und/oder einer Ammonium-Komponente $B^4$ der Formel V

$$\left[ R^{16} - \underset{R^{17}}{\overset{R^{15}}{N}} - (CH_2)_q{-}X{-}CO{-}(CH_2)_r{-}\overset{R^{18}}{C}{=}CHR^{19} \right]^{\oplus} Z^{\ominus} \qquad (V)$$

besteht und

c) eine (Meth)Acrylester-Komponente C der Formel VI

$$CH_2{=}\overset{R^{20}}{C}{-}COOR^{21} \qquad (VI)$$

im Molverhältnis A:B:C = 1:(0,002 bis 4,5):(0 bis 0,5) in Wasser oder in einem mit Wasser mischbaren Lösungsmittel bei Temperaturen von 40 bis 100°C copolymerisiert werden und anschließend im wäßrigen Medium mit

d) einer polyfunktionellen Alkylierungskomponente D und

e) einer Polyamin-Komponente E, die aus einer Polyamin-Komponente $E^1$ der Formel VII

$$H_2N{-}(CH_2)_s \left[ NH{-}(CH_2)_s{-}\underset{T}{N}{-}(CH_2)_s \right]_t NH_2 \qquad (VII)$$

und/oder einer Polyamin-Komponente $E^2$ der Formel VIII

$$HOOC{-}R^{22}CO{-}NH{-}(CH_2)_u{-}NH \left[ (CH_2)_u{-}NH \right]_w R^{23} \qquad (VIII)$$

besteht,

im Molverhältnis $B^1$:D:E = 1:(0,002 bis 2):(0 bis 5), bei Temperaturen von 30 bis 80°C umgesetzt werden, wobei bedeuten:

$R^1$, $R^2$, $R^5$, $R^6$, $R^{21}$ = $(C_1{-}C_{10})$Alkyl,

$R^3$, $R^4$, $R^7$, $R^8$, $R^{11}$, $R^{12}$, $R^{18}$, $R^{19}$, $R^{20}$ = Wasserstoff oder Methyl,

$R^9$, $R^{10}$, $R^{13}$ = Wasserstoff oder $(C_1{-}C_8)$Alkyl,

$R^{14}$, $R^{15}$, $R^{16}$, $R^{17}$ = $(C_1{-}C_8)$Alkyl oder

$R^{13}$ und $R^{14}$ zusammen = $-(CH_2)_3-$, $-(CH_2)_4-$ oder $-(Ch_2)_5-$,

$R^{22}$ = ein Alkylenrest mit 1 bis 8 C-Atomen oder Phenylen,

$R^{23}$ Wasserstoff oder den Rest $-CO-R^{22}-COOH$,

X = —NH— oder —O—,

$Y^{\ominus}$, $Z^{\ominus}$ = ein einwertiges Anion oder ein einem enwertigen Anion äquivalenter Teil eines mehrwertigen Anions,

T = $\left[ (CH_2)_s{-}NH \right]_v H$

m, q = eine der Zahlen 2, 3, 4, 5, 6, 7, 8, 9 10,

n, p, r, w = eine der Zahlen 0, 1, 2 oder 3,

s, u = eine der Zahlen 2, 3, 4 oder 5,

v = die Zahl 0 oder eine so große Zahl, daß die Polyamin-Komponente $E^1$ unter Berücksichtigung von t ein Molgewicht von 1000 bis 30000 besitzt,

t = eine so große Zahl, daß unter Berücksichtigung von v das Molgewicht der Polyamin-Komponente $E^1$ der Formel VIII zwischen 1000 und 30000 liegt.

2. Verfahren nach Anspruch 1, dadurch gekennzeichnet, daß $R^1$, $R^2$, $R^5$, $R^6$, $R^{14}$, $R^{15}$, $R^{16}$ und/oder $R^{17}$ = $(C_1{-}C_4)$Alkyl und/oder daß $R^3$ und/oder $R^4$ = Wasserstoff und/oder $R^9$, $R^{10}$ und/oder $R^{13}$ = Wasserstoff oder $(C_1{-}C_4)$Alkyl bedeuten.

3. Verfahren nach Ansprüchen 1 und/oder 2, dadurch gekennzeichnet, daß n und/oder p und/oder r = O bedeuten.

4. Verfahren nach einem oder mehreren der Ansprüche 1 bis 3, dadurch gekennzeichnet, daß das Molverhältnis A:B:C=1:(0,02 bis 2,5):0 beträgt.

5. Verfahren nach einem oder mehreren der Ansprüche 1 bis 5, dadurch gekennzeichnet, daß das Molverhältnis $B^1$:D:E = 1:(0,002 bis 1):(0,05 bis 5) beträgt.

6. Verwendung des nach einem der Ansprüche 1 bis 5 hergestellten Copolymerisats, als Textilhilfsmittel.

7. Verwendung des nach einem oder mehreren der Ansprüche 1 bis 5 hergestellten Copolymerisats als Textilhilfsmittel zur Echtheitsverbesserung von Färbungen und Drucken mit Reaktivfarbstoffen.

8. Verwendung des nach einem oder mehreren der Ansprüche 1 bis 5 hergestellten Copolymerisats als Textilhilfsmittel zur Echtheitsverbesserung von Färbungen und Drucken mit Substantivfarbstoffen und/oder Reaktivfarbstoffen.

9. Verwendung des nach einem oder mehreren der Ansprüche 1 bis 5 hergestellten Copolymerisats als Textilhilfsmittel zur Echtheitsverbesserung beim quasi einbadigen Schlichten und Färben von Zellulosematerialien mit Küpenfarbstoffen.

10. Verwendung des nach oder mehreren der Ansprüche 1 bis 5 hergestellten Copolymerisats als Textilhilfsmittel zur Echtheitsverbesserung von Färbungen und Drucken auf Zellulosematerialien, die einer Ausrüstung oder Hockveredelung unterworfen werden.

**Revendications pour les Etats contractants: BE CH DE FR GB IT LI NL**

1. Copolymère qui peut être préparé par copolymérisation:

a) d'une composante diallylammonium A de formule I

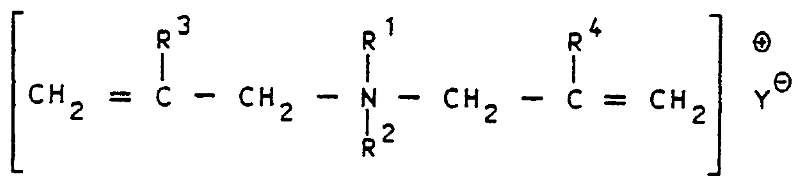

(I)

et

b) d'une composante amide B constituée d'une composante $B^1$ de formule II:

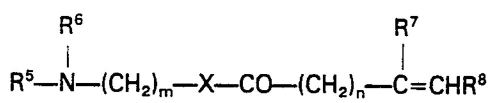

(II)

et éventuellement d'une composante amide $B^2$ de formule III:

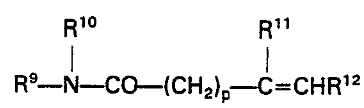

(III)

et/ou d'une composante N-vinyl-acrylamide $B^3$ de formule IV:

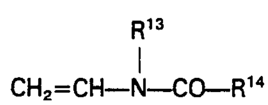

(IV)

et/ou d'une composante ammonium $B^4$ de formule V:

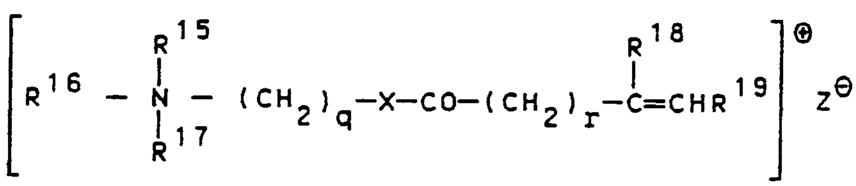

(V)

et

c) d'une composante ester acrylique ou méthacrylique C de formule VI:

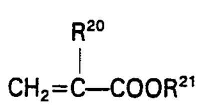

(VI)

dans un rapport molaire A:B:C de 1:(0,002 à 4,5):(0 à 0,5), puis réticulation avec:

d) une composant d'alklylation polyfonctionnelle D et

e) une composante polyamine E constituée d'une composante polyamine $E^1$ de formule VIII

$$H_2N-(CH_2)_s\left[NH-(CH_2)_s-\underset{\displaystyle T}{\underset{|}{N}}-(CH_2)_s\right]_t NH_2 \qquad (VII)$$

et/ou d'une composante polyamine $E^2$ de formule VIII:

$$HOOC-R^{22}CO-NH-(CH_2)_u-NH\left[(CH_2)_u-NH\right]_w R^{23} \qquad (VIII)$$

dans un rapport molaire $B^1$:D:E de 1:(0,002 à 2):(0 à 5), formules dans lesquelles:

$R^1$, $R^2$, $R^5$, $R^6$ et $R^{21}$ représente chacun un alkyle en $C_1$—$C_{10}$,

$R^3$, $R^4$, $R^7$, $R^8$, $R^{11}$, $R^{12}$, $R^{18}$, $R^{19}$ et $R^{20}$ représentent chacun l'hydrogène ou un méthyle,

$R^9$, $R^{10}$ et $R^{13}$ représentent chacun l'hydrogène ou un alkyle en $C_1$—$C_8$,

$R^{14}$, $R^{15}$, $R^{16}$ et $R^{17}$ représentent chacun un alkyle en $C_1$—$C_8$, ou

$R^{13}$ et $R^{14}$ forment ensemble un radical —$(CH_2)3$—, —$(CH_2)4$— ou —$(CH_2)5$—,

$R^{22}$ représente un alkylène contenant de 1 à 8 atomes de carbone ou un phénylène,

$R^{23}$ représente l'hydrogène ou un radical —CO—$R^{22}$—COOH,

X représente —NH— ou —O—,

$Y^{\ominus}$ et $Z^{\ominus}$ représentent chacun un anion univalent ou une partie équivalente à un anion univalent d'un anion multivalent,

T représente un radical $-[(CH_2)_s-NH]_v-H$

m et q représentent chacun l'un des nombres 2, 3, 4, 5, 6, 7, 8, 9 10,

n, p, r et w représentent chacun l'un des nombres 0, 1, 2 et 3,

s et u représentent chacun l'un des nombres 2, 3, 4 et 5,

v est égal à 0 ou représente un nombre suffisamment grand pour que la composante polyamine $E^1$ ait compte tenu de la valeur de t, une masse moléculaire de 1000 à 30000, et

t désigne un nombre suffisamment grand pour que, compte tenu de la valeur de v, la masse moléculaire de la composante polyamine $E^1$ de formule VII soit comprise entre 1000 et 30000.

2. Copolymère selon la revendication 1 caractérisé en ce que $R^1$, $R^2$, $R^5$, $R^6$, $R^{14}$, $R^{15}$, $R^{16}$ et/ou $R^{17}$ représentent un alkyle en $C_1$—$C_4$.

3. Copolymère selon la revendication 1 et/ou la revendication 2, caractérisé en ce que $R^3$ et/ou $R^4$ représentent l'hydrogène et/ou $R^9$, $R^{10}$ et/ou $R^{13}$ représentent l'hydrogène ou un alkyle en $C_1$—$C_4$.

4. Copolymère selon une ou plusieurs des revendications 1 à 3, caractérisé en ce que n et/ou p et/ou r sont égaux à 0.

5. Copolymère selon une ou plusieurs des revendications 1 à 4, caractérisé en ce que le rapport molaire A:B:C est de 1:(0,02 à 2,5):0.

6. Copolymère selon une ou plusieurs des revendications 1 à 5, caractérisé en ce que le rapport molaire $B^1$:D:E est de 1:(0,002 à 1):(0,05 à 5).

7. Procédé pour préparer le copolymère défini dans une ou plusieurs des revendications 1 à 6, procédé caractérisé en ce qu'on copolymérise à des températures de 40 à 100°C:

a) une composante diallylammonium A de formule I,

b) une composante amide B constituée d'une composante basique $B^1$ de formule II et, éventuellement, d'une composante amide $B^2$ de formule III et/ou d'une composante N-vinylacylamide $B^3$ de formule IV et/ou d'une composante ammonium B de formule V, et

c) une composante ester acrylique ou méthacrylique de formule VI, dans un rapport molaire A:B:C de 1:(0,002 à 4,5):(0 à 0,5), dans de l'eau ou dans un solvant miscible à l'eau, puis on fait réagir en milieu aqueux à des températures de 30 à 80°C avec:

d) une composante d'alkylation polyfonctionnelle D et

e) une composante polyamine E constituée d'une composante polyamine $E^1$ de formule VII et/ou d'une composante polyamine $E^2$ de formule VIII, dans un rapport molaire $B^1$:D:E de 1:(0,002 à 2):(0 à 5).

8. Procédé selon la revendication 7 caractérisé en ce que le rapport molaire A:B:C de 1:(0,02 à 2,5):0 et/ou le rapport molaire $B^1$:D:E est de 1:(0,002 à 1):(0,05 à 5).

9. Application du copolymère selon une ou plusieurs des revendications 1 à 6 comme adjuvant pour textiles, plus particulièrement comme adjuvant pour textiles destiné à améliorer les solidites de teintures et d'impressions réalisées avec des colorants réactifs et/ou des colorants substantifs et/ou des colorants de cuve.

10. Application du copolymère selon une ou plusieurs des revendications 1 à 6 comme adjuvant pour textiles destiné à améliorer les solidités dans le cas de l'encollage quasi-unibains de la teinture de matières cellulosiques avec des colorants de cuve, ou comme adjuvant pour textiles destiné à améliorer les solidités de teintures et d'impressions réalisées sur des matières cellulosiques qui sont soumises à un apprêtage ou à un ennoblissement de valeur.

**Revendications pour les Etats contractants: AT ES**

1. Procédé pour préparer un copolymère, procédé caractérisé en ce qu'on copolymérise à des températures de 40 à 100°C:

a) une composante diallylammonium A de formule I

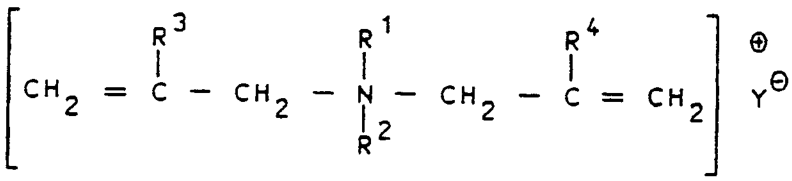

(I)

et

b) une composante amide B constituée d'une composante $B^1$ de formule II:

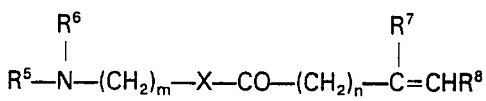

(II)

et éventuellement d'une composante amide $B^2$ de formule III:

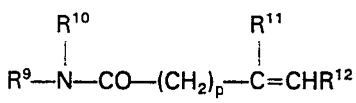

(III)

et/ou d'une composante N-vinylacylamide $B^3$ de formule IV:

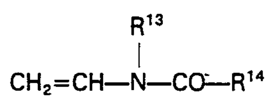

(IV)

et/ou d'une composante ammonium $B^4$ de formule V:

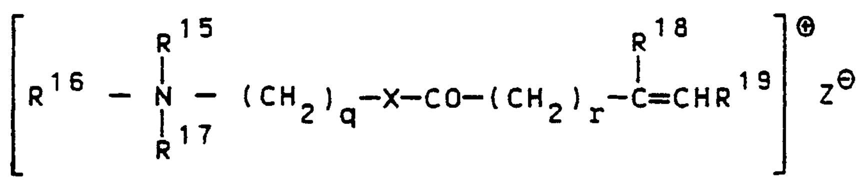

(V)

et

c) une composante ester acrylique ou méthacrylique C de formule VI:

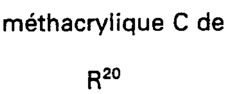

(VI)

dans un rapport molaire A:B:C de 1:(0,002 à 4,5):(0 à 0,5), dans de l'eau ou dans un solvant miscible à l'eau puis on fait réagir à des températures de 30 à 80°C, en milieu aqueux, avec:

d) une composant d'alklylation polyfonctionnelle D

et

e) une composante polyamine E constituée d'une composante polyamine $E^1$ de formule VIII

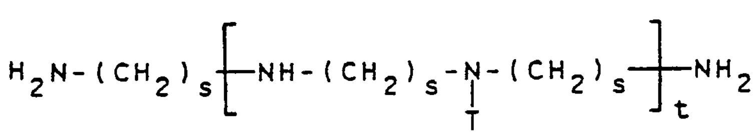

(VII)

et/ou d'une composante polyamine $E^2$ de formule VIII:

$$HOOC-R^{22}CO-NH-(CH_2)_u-NH-\left[(CH_2)_u-NH\right]_w-R^{23} \qquad (VIII)$$

dans un rapport molaire $B^1$:D:E de 1:(0,002 à 2):(0 à 5), formules dans lesquelles:

$R^1$, $R^2$, $R^5$, $R^6$ et $R^{21}$ représente chacun un alkyle en $C_1$—$C_{10}$,

$R^3$, $R^4$, $R^7$, $R^8$, $R^{11}$, $R^{12}$, $R^{18}$, $R^{19}$ et $R^{20}$ représentent chacun l'hydrogène ou un méthyle,

$R^9$, $R^{10}$ et $R^{13}$ représentent chacun l'hydrogène ou un alkyle en $C_1$—$C_8$,

$R^{14}$, $R^{15}$, $R^{16}$ et $R^{17}$ représentent chacun un alkyle en $C_1$—$C_8$, ou

$R^{13}$ et $R^{14}$ forment ensemble un radical —$(CH_2)3$—, —$(CH_2)4$— ou —$(CH_2)5$—,

$R^{22}$ représente un alkylène contenant de 1 à 8 atomes de carbone ou un phénylène,

$R^{23}$ représente l'hydrogène ou un radical —CO—$R^{22}$—COOH,

X représente —NH— ou —O—,

$Y^{\ominus}$ et $Z^{\ominus}$ représentent chacun un anion univalent ou une partie équivalente à un anion univalent d'un anion multivalent,

T représente un radical $\left[(CH_2)_s—NH\right]_v H$

m et q représentent chacun l'un des nombres 2, 3, 4, 5, 6, 7, 8, 9 10,

n, p, r et w représentent chacun l'un des nombres 0, 1, 2 et 3,

s et u représentent chacun l'un des nombres 2, 3, 4 et 5,

v est égal à 0 ou représente un nombre suffisamment grand pour que la composante polyamine $E^1$ ait, compte tenu de la valeur de t, une masse moléculaire de 1000 à 30000, et

t désigne un nombre suffisamment grand pour que, compte tenu de la valeur de v, la masse moléculaire de la composante polyamine $E^1$ de formule VII soit comprise entre 1000 et 30000.

2. Procédé selon la revendication 1 caractérisé en ce que $R^1$, $R^2$, $R^5$, $R^6$, $R^{14}$, $R^{15}$, $R^{16}$ et/ou $R^{17}$ représentent un alkyle en $C_1$—$C_4$ et/ou $R^3$ et/ou $R^4$ représentent l'hydrogène et/ou $R^9$, $R^{10}$ représentent l'hydrogène ou un alkyle en $C_1$—$C_4$.

3. Procédé selon les revendications 1 et/ou 2, caractérisé en ce que n et/ou p et/ou r sont égaux à 0.

4. Procédé selon une ou plusieurs des revendications 1 à 3, caractérisé en ce que le rapport molaire A:B:C est de 1:(0,02 à 2,5):0.

5. Procédé selon une ou plusieurs des revendications 1 à 4, caractérisé en ce que le rapport molaire $B^1$:D:E est de 1:(0,002 à 1):(0,05 à 5).

6. Application du copolymère préparé selon une ou plusieurs des revendications 1 à 5, comme adjuvant pour textiles.

7. Application du copolymère préparé selon une ou plusieurs des revendications 1 à 5, comme adjuvant pour textiles destiné à améliorer les solidités de teintures et d'impressions réalisées avec des colorants réactifs.

8. Application du copolymère préparé selon une ou plusieurs des revendications 1 à 5, comme adjuvant pour textiles destiné à améliorer les solidités de teintures et d'impressions réalisées avec des colorants substantifs et/ou des colorants de cuve.

9. Application du copolymère préparé selon une ou plusieurs des revendications 1 à 5, comme adjuvant pour textiles destiné à améliorer les solidités dans le cas d'encollages quasi-unibains des teintures de matières cellulosiques réalisées avec des colorants de cuve.

10. Application du copolymère préparé selon une ou plusieurs des revendications 1 à 5, comme adjuvant pour textiles destiné à améliorer les solidités de teintures et d'impressions sur matières cellulosiques qui sont soumises à un apprêtage ou à un ennoblissement de valeur.

**Claims for the Contracting States: BE CH DE FR GB IT LI NL**

1. Copolymer which can be prepared by copolymerizing a diallylammonium component A of the formula I

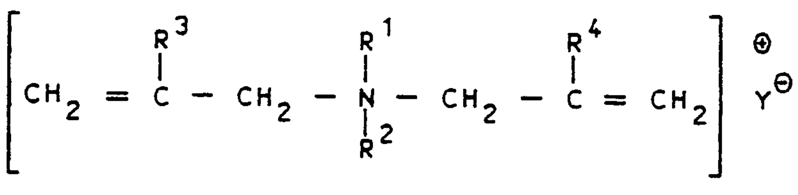

(I)

and

b) an amide component B consisting of a basic component $B^1$ of the formula II

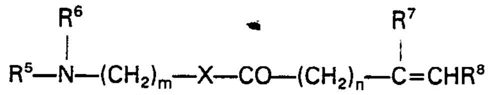

(II)

and optionally an amide component $B^2$ of the formula III

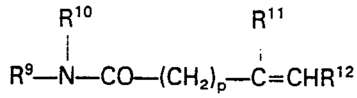

(III)

and/or an N-vinylacylamide component $B^3$ of the formula IV

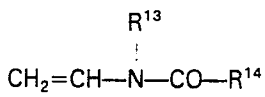

(IV)

and/or an ammonium component $B^4$ of the formula V

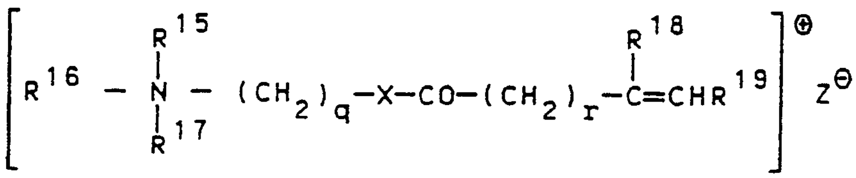

(V)

and

c) a (meth)acrylic ester component C of the formula VI

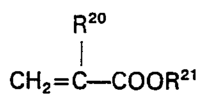

(VI)

in a molar ratio A:B:C = 1:(0.002 to 4.5):(0 to 0.5) and by subsequent crosslinking with

d) a polyfunctional alkylation component D and

e) a polyamine component E consisting of a polyamine component $E^1$ of the formula VII

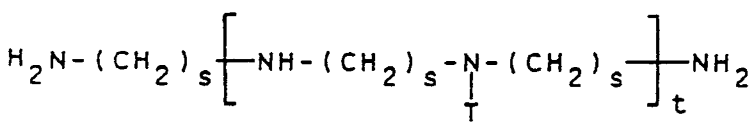

(VII)

and/or a polyamine component $E^2$ of the formula VIII

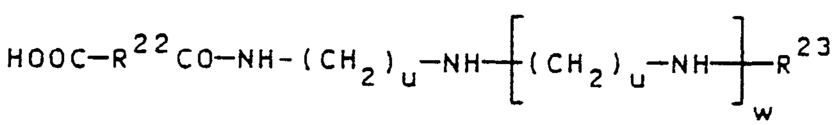

(VIII)

in a molar ratio $B^1$:D:E of 1:(0.002 to 2):(0 to 5),

$R^1$, $R^2$, $R^5$, $R^6$ and $R^{21}$ being $(C_1—C_{10})$-alkyl,

$R^3$, $R^4$, $R^7$, $R^8$, $R^{11}$, $R^{12}$, $R^{18}$, $R^{19}$ and $R^{20}$ being hydrogen or methyl,

$R^9$, $R^{10}$ and $R^{13}$ being hydrogen or $(C_1—C_8)$-alkyl,

$R^{14}$, $R^{15}$, $R^{16}$ and $R^{17}$ being $(C_1—C_8)$-alkyl or

$R^{13}$ and $R^{14}$ together being $—(CH_2)_3—$, $—(CH_2)_4—$ or $—(CH_2)_5—$,

$R^{22}$ being an alkylene radical having 1 to 8 C atoms or phenylene,

$R^{23}$ being hydrogen or the radical $—CO—R^{22}—COOH$,

X being —NH— or —O—

$Y^{\ominus}$, $Z^{\ominus}$ being a monovalent anion or a portion of a polyvalent anion equivalent to a monovalent anion,

T being $\left[(CH_2)_s—NH\right]_v H$

m and q being one of the numbers 2, 3, 4, 5, 6, 7, 8, 9 or 10,

n, p, r and w being one of the numbers 0, 1, 2 or 3,

s and u being one of the numbers 2, 3, 4 or 5,

v being the number 0 or a number of such magnitude that, taking into account t, the polyamine component $E^1$ has a molecular weight of 1000 to 30,000 and

t being a number of such magnitude that, taking account of v, the molecular weight of the polyamine component $E^1$ of the formula VII is between 1000 and 30,000.

2. Copolymer according to Claim 1, characterized in that $R^1$, $R^2$, $R^5$, $R^{14}$, $R^{15}$, $R^{16}$ and/or $R^{17}$ denote $(C_1—C_4)$-alkyl.

3. Copolymer according to Claim 1 and/or 2, characterized in that $R^3$ and/or $R^4$ denote hyrogen and/or $R^9$, $R^{10}$ and/or $R^{13}$ denote hydrogen or $(C_1—C_4)$-alkyl.

4. Copolymer according to one or more of Claims 1 to 3, characterized in that n and/or p and/or r denote O.

5. Copolymer according to one or more of Claims 1 to 4, characterized in that the molar ratio A:B:C is 1:(0.02 to 2.5):0.

6. Copolymer according to one or more of Claims 1 to 5, characterized in that the molar ratio $B^1$:D:E is 1:(0.002 to 1):(0.05 to 5).

7. Process for the preparation of the copolymer indicated in one or more of Claims 1 to 6, characterized in that

a) a diallylammonium component A of the formula I and

b) an amide component B which consists of a basic component $B^1$ of the formula II and optionally of an amide component $B^2$ of the formula III and/or an N-vinylacyamide component $B^3$ of the formula IV and/or of an ammonium component $B^4$ of the formula V, and

c) a (meth)acrylic ester component C of the formula VI are copolymerized in a molar ratio A:B:C of 1:(0.002 to 4.5):(0 to 0.5) in water or in a solvent miscible with water at temperatures from 40 to 100°C and are subsequently reacted in an aqueous medium with

d) a polyfunctional alkylation component D and

e) a polyamine component E which consists of a polyamine component $E^1$ of the formula VII and/or a polyamine component $E^2$ of the formula VIII, in a molar ratio $B^1$:D:E of 1:(0.002 to 2):(0 to 5) at temperatures from 30 to 80°C.

8. Process according to Claim 7, characterized in that the molar ratio A:B:C is 1:(0.02 to 2.5):0 and/or the molar ratio $B^1$:D:E is 1:(0.002 to 1):(0.05 to 5).

9. The use of the copolymer of one or more of Claims 1 to 6 as a textile auxiliary, in particular as a textile auxiliary for improving the fastness of dyeings and prints obtained with reactive dyestuffs and/or with substantive dyestuffs and/or vat dyestuffs.

10. The use of the copolymer of one or more of Claims 1 to 6 as a textile auxiliary for improving fastness in the quasi one-bath sizing and dyeing of cellulose materials with vat dyestuffs or as textile auxiliary for improving the fastness of dyeings and prints on cellulose materials which are subjected to finishing or permanent finishing.

**Claims for the Contracting States: AT ES**

1. Process for preparing a copolymer characterised in that

a) a diallylammonium component A of the formula I

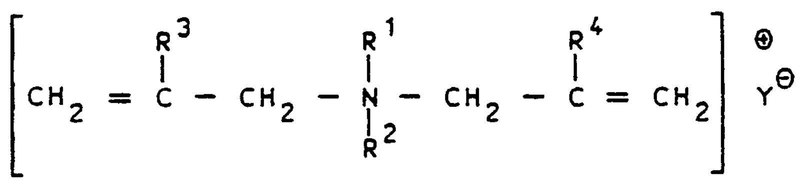

(I)

and

b) an amide component B consisting of a basic component $B^1$ of the formula II

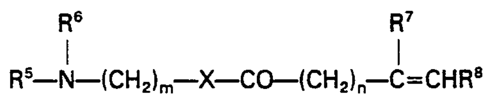

(II)

and optionally an amide component $B^2$ of the formula III

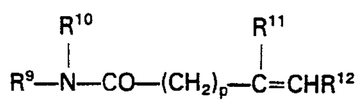

(III)

and/or an N-vinylacylamide component $B^3$ of the formula IV

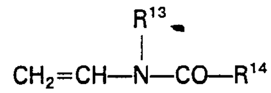

(IV)

and/or an ammonium component $B^4$ of the formula V

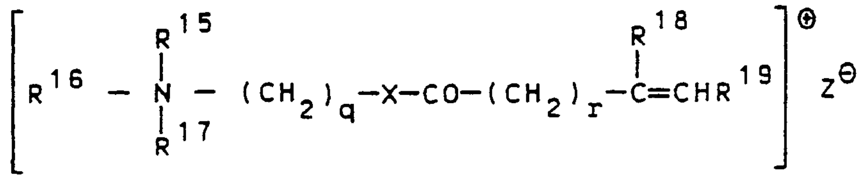

(V)

and

c) a (meth)acrylic ester component C of the formula VI

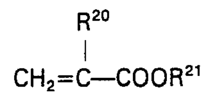

(VI)

are copolymerized in a molar ratio A:B:C = 1:(0.002 to 4.5):(0 to 0.5) in water or in a solvent miscible with water at temperatures from 40 to 100°C and are subsequently reacted in a aqueous medium with

d) a polyfunctional alkylation component D and

e) a polyamine component E consisting of a polyamine component $E^1$ of the formula VII

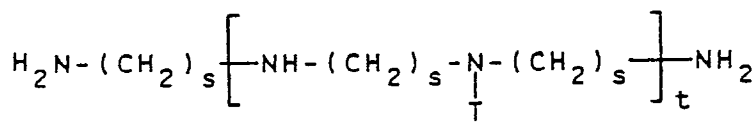

(VII)

and/or a polyamine component $E^2$ of the formula VIII

$$HOOC—R^{22}CO—NH-(CH_2)_u—NH—[(CH_2)_u—NH]_w—R^{23} \quad (VIII)$$

in a molar ratio $B^1$:D:E of 1:(0.002 to 2):(0 to 5), at temperatures between 30 and 80°C,

$R^1$, $R^2$, $R^5$, $R^6$ and $R^{21}$ being $(C_1—C_{10})$-alkyl,

$R^3$, $R^4$, $R^7$, $R^8$, $R^{11}$, $R^{12}$, $R^{18}$, $R^{19}$ and $R^{20}$ being hydrogen or methyl,

$R^9$, $R^{10}$ and $R^{13}$ being hydrogen or $(C_1—C_8)$-alkyl,

$R^{14}$, $R^{15}$, $R^{16}$ and $R^{17}$ being $(C_1—C_8)$-alkyl or

$R^{13}$ and $R^{14}$ together being $—(CH_2)_3—$, $—(CH_2)_4—$ or $—(CH_2)_5—$,

$R^{22}$ being an alkylene radical having 1 to 8 C atoms or phenylene,

$R^{23}$ being hydrogen or the radical $—CO—R^{22}—COOH$,

X being —NH— or —O—

$Y^{\ominus}$, $Z^{\ominus}$ being a monovalent anion or a portion of a polyvalent anion equivalent to a monovalent anion,

T being $[(CH_2)_s—NH]_v H$

m and q being one of the numbers 2, 3, 4, 5, 6, 7, 8, 9 or 10,

n, p, r and w being one of the numbers 0, 1, 2 or 3,

s and u being one of the numbers 2, 3, 4 or 5,

v being the number 0 or a number of such magnitude that, taking into account t, the polyamine component $E^1$ has a molecular weight of 1000 to 30,000 and

t being a number of such magnitude that, taking account of v, the molecular weight of the polyamine component $E^1$ of the formula VII is between 1000 and 30,000.

2. Process according to Claim 1, characterized in that $R^1$, $R^2$, $R^5$, $R^6$, $R^{14}$, $R^{15}$, $R^{16}$ and/or $R^{17}$ denote $(C_1—C_4)$-alkyl and/or that $R^3$ and/or $R^4$ denote hydrogen and/or $R^9$, $R^{10}$ and/or $R^{13}$ denote hydrogen or $(C_1—C_4)$-alkyl.

3. Process according to Claim 1 and/or 2, characterized in that n and/or p and/or r denote 0.

4. Process according to one or more of Claims 1 to 3, characterized in that the molar ratio A:B:C is 1:(0.02 to 2.5):0.

5. Copolymer according to one or more of Claims 1 to 4, characterized in that the molar ratio $B^1$:D:E is 1:(0.002 to 1):(0.05 to 5).

6. Use of the copolymer prepared according to one or more of Claims 1 to 5 as a textile auxiliary.

7. Use of the copolymer prepared according to one or more of Claims 1 to 5 as a textile auxiliary for improving the fastness of dyeings and prints obtained with reactive dyestuffs.

8. Use of the copolymer prepared according to one or more of Claims 1 to 5 as a textile auxiliary for improving the fastness of dyeings and prints obtained with substantive dyestuffs and/or vat dyestuffs.

9. Use of the copolymer prepared according to one or more of Claims 1 to 5 as a textile auxiliary for improving fastness in the quasi one-bath sizing and dyeing of cellulose materials with vat dyestuffs.

10. Use of the copolymer prepared according to one or more of Claims 1 to 5 as a textile auxiliary for improving the fastness of dyeings and prints on cellulose materials which are subjected to finishing or permanent finishing.